# EUROPEAN PATENT APPLICATION

(11) **EP 4 299 521 A1**
(43) Date of publication of application: **03.01.2024**
(21) Application number: 22759663.2
(22) Date of filing: 22.02.2022
(51) Int. Cl.: C01B 33/38, H01B 1/06, H01M 8/10, H01M 8/1016

(54) **DISPERSION OF EXFOLIATED PARTICLES OF LAYERED POLYSILICATE COMPOUND, AND METHOD FOR PRODUCING SAME**

(30) Priority: 24.02.2021 JP 2021027882
(71) Applicant: National University Corporation Kumamoto University, Kumamoto-shi, Kumamoto 860-8555 (JP); Nissan Chemical Corporation, Tokyo 103-6119 (JP)
(72) Inventor: IDA, Shintaro, Kumamoto-shi, Kumamoto 860-8555 (JP); AWAYA, Keisuke, Kumamoto-shi, Kumamoto 860-8555 (JP); SEKIGUCHI, Kazutoshi, Funabashi-shi, Chiba 274-0052 (JP); KITAGAWA, Hirotake, Sodegaura-shi, Chiba 299-0266 (JP); YAMADA, Shuhei, Funabashi-shi, Chiba 274-0052 (JP)
(74) Representative: Hoffmann Eitle
(86) International application number: PCT/JP2022/007351
(87) International publication number: WO 2022/181628

(57) **Abstract**

To provide a dispersion of exfoliated particles in which a layered polysilicate compound is interlayer-exfoliated. A dispersion of exfoliated particles which includes at least one nitrogen-containing basic compound (A) which is a tertiary amine or a quaternary ammonium hydroxide having at least one alkyl group having 3 or 4 carbon atoms, and in which exfoliated particles (C) produced by interlayer-exfoliating a proton-type layered polysilicate compound (B) are dispersed in an aqueous solution (D) having 10 vol% to 90 vol% of an alcohol having 1 to 3 carbon atoms; and a film-forming composition, a porous body-forming composition, an LB film, a coating film, a free-standing membrane, a proton conductor, an electrolyte membrane for fuel cells, and a porous body each containing exfoliated particles.

## Description

### TECHNICAL FIELD

The present invention relates to a dispersion of exfoliated particles generated by interlayer exfoliation of a layered polysilicate compound, and a production method for the dispersion.

### BACKGROUND ART

Layered compounds, for example, layered polysilicate compounds such as octosilicate (also called "ilerite"), kanemite, kenyaite, makatite, and magadiite, each have a crystal structure wherein atoms forming the compound are linked in a lateral direction to form plate-like molecules (layers), and several tens to thousands of the plate-like molecules (layers), serving as unit structures, are stacked in the remaining one direction. The presence of water or cations between the layers for bonding the layers together leads to formation of strong layer-layer bonds, and the bonds result in formation of a layered polysilicate compound including layers and interlayer spaces. For example, there has been disclosed the synthesis of octosilicate, kenyaite, or magadiite, which is a type of layered polysilicate compound (see Non-Patent Documents 1, 2, and 3).

Such a layered polysilicate compound exhibits intercalation; i.e., the property of reversibly incorporating various ions or molecules between layers, and the interlayer distance changes depending on the size of ions or molecules incorporated between the layers. When the bonds formed between the layers are broken as a result of the change in interlayer distance in a liquid medium, plate-like substances forming the layers are exfoliated (hereinafter referred to as "interlayer exfoliation"), to thereby form a dispersion system wherein the exfoliated substances (exfoliated pieces) (hereinafter referred to as "exfoliated particles") are dispersed in the liquid medium. The exfoliated particles generated by the interlayer exfoliation are also called "nanosheets," and methods for preparing a nanosheet dispersion (sol) have hitherto been reported.

For example, there has been disclosed the production of a dispersion of exfoliated particles by intercalation of hexadecyltrimethylammonium ions between Na-type octosilicate layers, and subsequent silane treatment of interlayer spaces with 1-butyl-3-(3-triethoxysilylpropyl)-4,5-dihydroimidazolium chloride, followed by interlayer exfoliation under ultrasonic irradiation in water (see Non-Patent Document 4).

There has also been disclosed the production of a dispersion of exfoliated particles by preparation of a layered compound through intercalation of quaternary ammonium ions (e.g., didecyldimethylammonium ions or hexadecyltrimethylammonium ions) between Na-type octosilicate layers, and interlayer exfoliation of the layered compound under ultrasonic irradiation in a pentane solvent (see Non-Patent Document 5)

Because of this property, a layered polysilicate compound is used as a catalyst, a filler, an adsorbent, an ion exchanger, etc., and is also expected to be applied to a nanocomposite combined with, for example, a resin. For example, there has been disclosed an antifouling anti-reflective coating including a silica-based porous film and an antifouling layer covering the surface of the silica-based porous film, wherein the antifouling layer includes a plurality of nanosheets derived from a layered polysilicate compound (see Patent Document 1).

### Prior Art Documents

### Patent Documents

Patent Document 1: WO 2014/061606

### Non-Patent Documents

Non-Patent Document 1: G. Borbely and H. K. Beyer, "Chemical Characterization, Structural features, and thermal behavior of sodium and hydrogen a octosilicate," Clays and Clay Minerals, 1991, Vol. 39, No. 5, p 490-497

Non-Patent Document 2: Tomohiro Iwasaki et al., "Seeding effect on crystal growth in hydrothermal synthesis of layered octosilicate," Chemical Engineering Communications, 2006, Vol. 193, Issue 1, p. 69-76

Non-Patent Document 3: Haruto Muraishi, "Variations of Surface Property and Interplanar Spacing of Kenyaite and Magadiite with Ion Exchange and Heating, " Journal of the Clay Science Society of Japan, 1996, Vol. 36, No. 1, p. 22-34

Non-Patent Document 4: Nobuyuki Takahashi et al., "Exfoliation of layered silicates through immobilization of imidazolium groups" Chemistry of Materials, 2011, Vol. 23, No. 2, p. 266-273

Non-Patent Document 5: Shimon Osada et al., "Exfoliation of Layered Octosilicate by Simple Cation Exchange with Didecyldimethylammonium Ions," Chemistry Letters, 2013, Vol. 42, p. 80-82

### SUMMARY OF THE INVENTION

### Problems to be Solved by the Invention

However, conventionally reported techniques may encounter much difficulty in causing interlayer exfoliation of a layered polysilicate compound. Even if interlayer exfoliation occurs, the conventional techniques may pose a problem in terms of poor dispersibility due to insufficient progression of interlayer exfoliation per se, for example, a very low degree of interlayer exfoliation, or different thicknesses of exfoliated particles caused by mixing of a single exfoliated layer and multiple exfoliated layers. In addition, the conventional techniques may cause a problem in that it is difficult to prepare exfoliated particles by interlayer exfoliation while the form of the particulate layer before interlayer exfoliation is maintained.

The present invention has been made for solving the aforementioned problems, and an object of the present invention is to provide a dispersion of exfoliated particles prepared by interlayer exfoliation of a layered polysilicate compound, wherein the layered polysilicate compound exhibits excellent interlayer exfoliation property, and the exfoliated particles generated by the interlayer exfoliation exhibit excellent particle shape maintainability; a film and a porous body, each of which contains the exfoliated particles; and a production method for the dispersion.

### Means for Solving the Problems

The present inventors have conducted extensive studies for solving the aforementioned problems, and as a result have accomplished the invention described below. Accordingly, the present invention is as follows.

A first aspect of the present invention is an exfoliated particle dispersion characterized by comprising at least one nitrogen-containing basic compound (A), which is a tertiary amine or quaternary ammonium hydroxide having one or more C₃₋₄ alkyl groups, wherein exfoliated particles (C) generated by interlayer exfoliation of a protonic layered polysilicate compound (B) are dispersed in a 10 vol% to 90 vol% aqueous C₁₋₃ alcohol solution (D).

A second aspect of the present invention is the exfoliated particle dispersion according to the first aspect, wherein the nitrogen-containing basic compound (A) is tributylamine, tetrapropylammonium hydroxide, or tetrabutylammonium hydroxide.

A third aspect of the present invention is the exfoliated particle dispersion according to any one of the first or second aspect, wherein the protonic layered polysilicate compound (B) is protonic octosilicate.

A fourth aspect of the present invention is the exfoliated particle dispersion according to any one of the first to third aspects, wherein the exfoliated particles (C) are plate-like particles having an average thickness of 5 nm or less.

A fifth aspect of the present invention is the exfoliated particle dispersion according to any one of the first to fourth aspects, wherein the aqueous alcohol solution (D) is an aqueous solution of at least one alcohol selected from the group consisting of methanol, ethanol, 1-propanol, and 2-propanol.

A sixth aspect of the present invention is a film-forming composition or porous body-forming composition comprising at least the exfoliated particles (C) in the exfoliated particle dispersion according to any one of the first to fifth aspects.

A seventh aspect of the present invention is a Langmuir-Blodgett (LB) film or coating film comprising at least the exfoliated particles (C) in the exfoliated particle dispersion according to any one of the first to fifth aspects.

An eighth aspect of the present invention is a free-standing membrane comprising at least the exfoliated particles (C) in the exfoliated particle dispersion according to any one of the first to fifth aspects.

A ninth aspect of the present invention is a proton conductor comprising the Langmuir-Blodgett (LB) film or coating film according to the seventh aspect or the free-standing membrane according to the eighth aspect.

A tenth aspect of the present invention is an electrolyte film for a fuel cell comprising the proton conductor according to the ninth aspect.

An eleventh aspect of the present invention is a porous body comprising at least the exfoliated particles (C) in the exfoliated particle dispersion according to any one of the first to fifth aspects.

A twelfth aspect of the present invention is a production method for an exfoliated particle dispersion, the method comprising:
a step of preparing a raw material liquid containing at least one nitrogen-containing basic compound (A), which is a tertiary amine or quaternary ammonium hydroxide having one or more C₃₋₄ alkyl groups, a protonic layered polysilicate compound (B), and a 10 vol% to 90 vol% aqueous C₁₋₃ alcohol solution (D), to thereby cause interlayer exfoliation of the protonic layered polysilicate compound (B), and to produce a dispersion of exfoliated particles (C) generated by the interlayer exfoliation and having an average thickness of 5 nm or less.

A thirteenth aspect of the present invention is the production method for an exfoliated particle dispersion according to the twelfth aspect, wherein the concentration of the nitrogen-containing basic compound (A) is 0.005 mol/L to 0.2 mol/L in the raw material liquid.

A fourteenth aspect of the present invention is the production method for an exfoliated particle dispersion according to the twelfth or thirteenth aspect, wherein the nitrogen-containing basic compound (A) is tributylamine, tetrapropylammonium hydroxide, or tetrabutylammonium hydroxide.

A fifteenth aspect of the present invention is the production method for an exfoliated particle dispersion according to any one of the twelfth to fourteenth aspects, wherein the protonic layered polysilicate compound (B) is protonic octosilicate.

A sixteenth aspect of the present invention is the production method for an exfoliated particle dispersion according to any one of the twelfth to fifteenth aspects, wherein the concentration of the nitrogen-containing basic compound (A) per unit mass of the protonic layered polysilicate compound (B) is 0.003 mol/g to 0.07 mol/g in the raw material liquid.

A seventeenth aspect of the present invention is the production method for an exfoliated particle dispersion according to any one of the twelfth to sixteenth aspects, wherein the aqueous alcohol solution (D) is an aqueous solution of at least one alcohol selected from the group consisting of methanol, ethanol, 1-propanol, and 2-propanol.

An eighteenth aspect of the present invention is the production method for an exfoliated particle dispersion according to any one of the twelfth to seventeenth aspects, wherein the production method further comprises a step of subjecting the raw material liquid to at least one of stirring treatment and ultrasonic treatment.

A nineteenth aspect of the present invention is the production method for an exfoliated particle dispersion according to any one of the twelfth to eighteenth aspects, wherein each step is performed at a liquid temperature of 10°C to 80°C.

### Effects of the Invention

The present invention can provide a dispersion of exfoliated particles prepared by interlayer exfoliation of a layered polysilicate compound, wherein the layered polysilicate compound exhibits excellent interlayer exfoliation property, and the exfoliated particles generated by the interlayer exfoliation exhibit excellent particle shape maintainability; and a production method for the dispersion.

In addition, the present invention can provide a dispersion wherein the aforementioned exfoliated particles generated by the interlayer exfoliation maintain the form of the particulate layer of a layered polysilicate compound (i.e., a substance before the interlayer exfoliation) and exhibit high dispersibility. The present invention can also provide a film-forming composition and a porous body-forming composition exhibiting maintained high dispersibility. The dispersion or the film-forming composition can form a variety of films. Thus, the present invention can provide a Langmuir-Blodgett (LB) film, coating film, or free-standing membrane formed from the dispersion or the composition. The film formed from the dispersion or the composition exhibits proton conductivity. Thus, the present invention can provide the aforementioned LB film, coating film, or free-standing membrane as a proton conductor for, for example, an electrolyte film for a fuel cell. The present invention can also provide a porous body formed from the dispersion or the porous body-forming composition.

### BRIEF DESCRIPTION OF THE DRAWINGS

[FIG. 1] FIG. 1(a) is a scanning probe micrograph of protonic octosilicate prepared in Particle Synthesis Example 1 before interlayer exfoliation. FIG. 1(b) is a scanning probe micrograph of an LB film formed from an exfoliated particle dispersion E1 prepared in Example 1. FIG. 1(c) is a scanning probe micrograph of an LB film formed from a dispersion C1 prepared in Comparative Example 1.
[FIG. 2] FIG. 2(a) is a scanning probe micrograph of an LB film formed from an exfoliated particle dispersion E1 prepared in Example 1; FIG. 2(b) is a scanning probe micrograph of an LB film formed from an exfoliated particle dispersion E3 prepared in Example 3; FIG. 2(c) is a scanning probe micrograph of an LB film formed from an exfoliated particle dispersion E4 prepared in Example 4; and FIG. 2(d) is a scanning probe micrograph of an LB film formed from an exfoliated particle dispersion E19 prepared in Example 19.
[FIG. 3] FIGS. 3(a) to 3(c) are scanning electron micrographs showing the appearance, surface (observation magnification: 50,000), and cross section (observation magnification: 120,000) of a coating film containing exfoliated particles produced in Example 22.
[FIG. 4] FIGS. 4(a) to 4(c) are scanning electron micrographs showing the appearance, surface (observation magnification: 9,000), and cross section (observation magnification: 5,000) of a free-standing membrane containing exfoliated particles produced in Example 26.
[FIG. 5] FIG. 5(a) shows the relative humidity dependence of the conductivity (σ) of a proton conductor produced in Example 28 at a temperature of 30°C. FIG. 5(b) shows the temperature dependence of the conductivity (σ) of the aforementioned proton conductor at a relative humidity of 97%. FIG. 5(c) shows the H₂O/D₂O ratio dependence of the conductivity (σ) of the aforementioned proton conductor at a temperature of 50°C and a relative humidity of 100%.
[FIG. 6] FIG. 6 shows the power generation properties (I-V property and output density) of an electrolyte film for a fuel cell produced in Example 29.
[FIG. 7] FIGS. 7(a) and 7(b) are scanning electron micrographs showing the appearance and surface (observation magnification: 30,000) of a porous body containing exfoliated particles produced in Example 31.

### MODES FOR CARRYING OUT THE INVENTION

The present invention will next be described in detail.

The exfoliated particle dispersion of the present invention is a dispersion containing at least one nitrogen-containing basic compound (A), which is a tertiary amine or quaternary ammonium hydroxide having one or more C₃₋₄ alkyl groups, wherein exfoliated particles (C) generated by interlayer exfoliation of a protonic layered polysilicate compound (B) are dispersed in a dispersion medium (liquid medium); i.e., a 10 vol% to 90 vol% aqueous C₁₋₃ alcohol solution (D). Hereinafter, the exfoliated particles (C) generated by interlayer exfoliation of the protonic layered polysilicate compound (B) will be referred to as "interlayer exfoliated particles" or will be referred to simply as "exfoliated particles."

The exfoliated particle dispersion of the present invention is preferably produced by, for example, a method described below.

Firstly, there is prepared a raw material liquid containing a 10 vol% to 90 vol% aqueous C₁₋₃ alcohol solution (D) (dispersion medium), at least one nitrogen-containing basic compound (A), which is a tertiary amine or quaternary ammonium hydroxide having one or more C₃₋₄ alkyl groups, and a protonic layered polysilicate compound (B). This step causes interlayer exfoliation of the protonic layered polysilicate compound (B), to thereby generate exfoliated particles (C) having an average thickness of 5 nm or less. This process can produce an exfoliated particle dispersion (sol) wherein the exfoliated particles (C) generated by the interlayer exfoliation of the layered polysilicate compound are dispersed in the aqueous alcohol solution.

When the raw material liquid is subjected to stirring treatment or ultrasonic treatment upon generation of the exfoliated particles having an average thickness of 5 nm or less by the interlayer exfoliation of the protonic layered polysilicate compound (B), the exfoliated particle dispersion containing the exfoliated particles (C) dispersed therein can be efficiently produced. The typical stirring or ultrasonic treatment time is, for example, 1 hour to 24 hours.

When the exfoliated particles having an average thickness of 5 nm or less are generated by the interlayer exfoliation of the protonic layered polysilicate compound (B) in the raw material liquid, each step may be performed at a liquid temperature of 10°C to 80°C, preferably 20°C to 60°C, to thereby efficiently produce the exfoliated particle dispersion containing the exfoliated particles (C) dispersed therein.

In the exfoliated particle dispersion, the surfaces of the exfoliated particles (C) may not be coated with the nitrogen-containing basic compound (A) or the water and alcohol of the aqueous alcohol solution (D), or the nitrogen-containing basic compound (A) or the water and alcohol of the aqueous alcohol solution (D) may not be adsorbed on the surfaces of the exfoliated particles (C). Alternatively, a portion of the particle surfaces may be coated with at least one of these, or at least one of these may be adsorbed on at least a portion of the particle surfaces.

The exfoliated particle dispersion may contain the protonic layered polysilicate compound (B) even after the interlayer exfoliation treatment, or before the interlayer exfoliation or during the interlayer exfoliation. The protonic layered polysilicate compound (B) may be removed by, for example, decantation, filtration, ultrafiltration, or centrifugation treatment.

The thus-produced exfoliated particle dispersion of the present invention exhibits high dispersibility. For example, the exfoliated particle dispersion exhibits such a high dispersion stability that no precipitation occurs even after the elapse of six months at room temperature.

### Nitrogen-Containing Basic Compound (A)

In the present invention, the nitrogen-containing basic compound (A) plays a role as an exfoliating agent for expanding the interlayer spaces of the layered polysilicate compound. Thus, the nitrogen-containing basic compound (A) preferably has a somewhat bulky organic group. Meanwhile, the nitrogen-containing basic compound (A) preferably exhibits high solubility in an aqueous alcohol solution. Thus, the present invention involves the use of a tertiary amine or quaternary ammonium hydroxide having one or more C₃₋₄ alkyl groups as the nitrogen-containing basic compound (A).

In the present invention, a compound capable of forming a pseudo quaternary ammonium hydroxide in an aqueous alcohol solution is excluded from the scope of the nitrogen-containing basic compound (A). For example, a quaternary ammonium nitrate or chloride having one or more C₃₋₄ alkyl groups may be dissociated in an aqueous alcohol solution. In this case, a pseudo quaternary ammonium hydroxide may be formed from a quaternary ammonium ion derived from the nitrate, etc. generated by the dissociation and a hydroxy ion present in the aqueous solution. The thus-formed pseudo hydroxide is excluded from the scope of the nitrogen-containing basic compound (A) in the present invention.

The dispersion of the present invention may contain a quaternary ammonium nitrate or chloride having one or more C₃₋₄ alkyl groups, so long as the effects of the present invention are not impaired.

No particular limitation is imposed on the nitrogen-containing basic compound (A); i.e., a tertiary amine or quaternary ammonium hydroxide having one or more C₃₋₄ alkyl groups. Specific examples of the nitrogen-containing basic compound (A) include N,N-dimethylisopropylamine, N,N-diethylisopropylamine, N-methyldiisopropylamine, N-ethyldiisopropylamine, tripropylamine, N,N-dimethylbutylamine, N,N-diethylbutylamine, methyldibutylamine, tributylamine, trimethylpropylammonium hydroxide, tetrapropylammonium hydroxide, and tetrabutylammonium hydroxide. Particularly preferred are tributylamine, tetrapropylammonium hydroxide, and tetrabutylammonium hydroxide. The aforementioned nitrogen-containing basic compounds (A) may be used alone or in combination of two or more species.

The concentration of the nitrogen-containing basic compound (A) in the exfoliated particle dispersion may be 0.005 mol/L to 0.2 mol/L, or 0.01 mol/L to 0.1 mol/L. Upon preparation of the aforementioned raw material liquid, the concentration (addition amount) of the nitrogen-containing basic compound (A) may be adjusted to fall within the range described above. A concentration of lower than 0.005 mol/L may lead to insufficient interlayer exfoliation property, which is not preferred. Meanwhile, a concentration of higher than 0.2 mol/L may lead to easy dissolution of the protonic layered polysilicate compound, which is not preferred.

### Protonic Layered Polysilicate Compound (B)

In the present invention, the protonic layered polysilicate compound (B) is preferably used from the viewpoint of improving the interlayer exfoliation property of the aforementioned nitrogen-containing basic compounds (A). For example, an Na-type layered polysilicate compound is not preferred, since it is less likely to cause intercalation with the nitrogen-containing basic compound (A), resulting in insufficient progression of interlayer exfoliation per se.

The aforementioned protonic layered polysilicate compound (B) may be prepared by converting a layered polysilicate compound into a protonic form by any known method. In general, the protonic layered polysilicate compound (B) is prepared by adding a layered polysilicate compound (e.g., n-type) to an acid such as hydrochloric acid, nitric acid, or sulfuric acid, or by subjecting the interlayer spaces of a layered polysilicate compound to ion exchange with a cation exchange resin or a cation exchange fiber.

Examples of the aforementioned layered polysilicate compound include kanemite, makatite, magadiite, kenyaite, and octosilicate. The composition of the layered polysilicate compound is represented by the following compositional formula (i). Examples of the alkali metal atom of M include Na, K, and Li.

M₂O·xSiO₂·yH₂O · · · (i)

[In the formula, M is an alkali metal atom; x is an integer of 2 to 40; and y is an integer of 1 to 20.]

Among these layered polysilicate compounds, octosilicate is preferably used. Octosilicate has a chemical formula of Na₂O·8SiO₂·nH₂O, has a planar silicic acid skeleton, and has silanol groups between layers. Since octosilicate is not a naturally occurring substance, it is artificially synthesized. Octosilicate may be synthesized by, for example, adding an aqueous sodium silicate solution or an aqueous solution of a mixture of silica and sodium hydroxide (the ratio by mole of SiO₂/Na₂O is, for example, 3.5 to 4.0) to a hermetic container, and performing a hydrothermal reaction at 90°C to 150°C for 1 day to 24 days. Alternatively, it may be synthesized by adding octosilicate itself as seed crystals (seed particles) to an aqueous sodium silicate solution. In general, a layered polysilicate compound may be produced in an aqueous solution having a concentration range of 30% by mass or less.

The solid material prepared by the hydrothermal reaction may be separated from unreacted material and then washed, to thereby recover octosilicate. After being washed, the resultant product may be suspended as is in a liquid medium and used, or may be dried once and used in the form of powder. The drying temperature is preferably equal to or lower than the temperature at which the crystal structure is not broken, for example, 40°C or lower.

The term "layered polysilicate compound" as used herein refers to a compound that does not have an octahedral structure (e.g., AlOe or MgO₆) in its crystal structure, and a clay mineral differs from the layered polysilicate compound to which the present invention is directed in that the clay mineral has the octahedral structure. Examples of the clay mineral include smectite, vermiculite, and layered double hydroxides (LDH). These are excluded from the scope of the layered polysilicate compound to which the present invention is directed.

For measurement of the major axis length and thickness of the aforementioned layered polysilicate compound, the powder of the compound is suspended or dispersed in an appropriate solvent, and the suspension or the dispersion is dropped onto an appropriate substrate and then dried. The major axis length and the thickness may be measured through observation with a scanning electron microscope (SEM), a transmission electron microscope (TEM), or a scanning probe microscope (SPM). Unnecessary components may be removed by heating during drying.

The thickness of one layer of the aforementioned layered polysilicate compound may be measured by any known method. For example, the thickness is measured by X-ray diffractometry. It is known that, for example, the thickness of one layer of protonic magadiite is 1.12 nm to 1.32 nm, the thickness of one layer of protonic kenyaite is about 1.64 nm, and the thickness of one layer of protonic octosilicate is about 0.74 nm (see Non-Patent Documents 1, 2, and 3).

The major axis length of the aforementioned layered polysilicate compound may be measured through, for example, observation with a scanning electron microscope (SEM), a transmission electron microscope (TEM), or a scanning probe microscope (SPM). It is known that the major axis length of protonic octosilicate is about 0.3 µm to 10 µm.

The concentration of the nitrogen-containing basic compound (A) per unit mass of the protonic layered polysilicate compound (B) may be 0.003 mol/g to 0.07 mol/g. Upon preparation of the aforementioned raw material liquid, the concentration (addition amount) of the nitrogen-containing basic compound (A) per unit mass of the protonic layered polysilicate compound (B) may be adjusted to fall within the range described above. A concentration of lower than 0.003 mol/g may lead to insufficient interlayer exfoliation property, which is not preferred. Meanwhile, a concentration of higher than 0.07 mol/g may lead to easy dissolution of the protonic layered polysilicate compound, which is not preferred.

The concentration of the protonic layered polysilicate compound (B) before interlayer exfoliation; i.e., the concentration (addition amount) of the protonic layered polysilicate compound (B) upon preparation of the aforementioned raw material liquid may be 0.1 g/L to 30 g/L, more preferably 1.0 g/L to 20 g/L. When the concentration (addition amount) of the protonic layered polysilicate compound (B) is lower than 0.1 g/L, the productivity of the exfoliated particle dispersion is impaired, which is not preferred. Meanwhile, when the concentration (addition amount) is higher than 30 g/L, exfoliation property is impaired, which is not preferred.

### Exfoliated Particles (C)

The exfoliated particles (C) generated by interlayer exfoliation of the protonic layered polysilicate compound (B) have an average thickness of 5 nm or less, for example, 0.5 nm to 5.0 nm, preferably 0.7 nm to 2.0 nm. As described below, the exfoliated particles (C) generally have a plate-like shape due to their origin. However, other shapes (e.g., spherical, polyhedral, angular, porous, rod-like, acicular, and amorphous shapes) are not excluded.

In the present invention, preferably, the exfoliated particles (C) are generated substantially by single-layer exfoliation of the aforementioned protonic layered polysilicate compound (B); i.e., the exfoliated particles (C) each have a thickness approximately equal to the thickness of one layer of each of the various compounds described above.

When the average thickness of the exfoliated particles (C) is more than 5.0 nm, the transparency or flexibility of a film containing the exfoliated particles is lowered, and the dispersibility of the exfoliated particles tends to deteriorate in the dispersion and film containing the particles. This is not preferred, since the particles may be aggregated or precipitated in the dispersion, which may lead to formation of a non-homogeneous film.

The aforementioned interlayer exfoliated particles (C) have a major axis length of 0.5 µm to 10 µm, preferably 1.0 µm to 5.0 µm. The major axis length is defined as the longest distance between two points. When the major axis length of the exfoliated particles (C) is less than 0.5 µm, film formability and barrier property are impaired, whereas when the major axis length is more than 10 µm, the dispersion stability deteriorates, which is not preferred.

The ratio of the major axis length of the exfoliated particles (C) to that of the protonic layered polysilicate compound (B) before the interlayer exfoliation; i.e., the ratio (CB) is desirably about 1. For example, the major axis length ratio (CB) is preferably 0.1 or more. When only water is used without use of the aqueous alcohol solution (D) described below, the major axis length ratio (CB) becomes less than 0.1. Thus, in the present invention, the major axis length ratio is higher than that in conventional cases, and shape maintainability can be achieved.

For measurement of the major axis length and thickness of the aforementioned interlayer exfoliated particles (C), the dispersion containing the exfoliated particles (C) is appropriately diluted with a solvent having dispersibility to the dispersion, and then the diluted dispersion is dropped onto an appropriate substrate and then naturally dried. The major axis length and the thickness may be measured through observation of the dried matter with a scanning electron microscope (SEM), a transmission electron microscope (TEM), or a scanning probe microscope (SPM). Unnecessary components may be removed by heating during drying. A sample applied (transferred) to a substrate by the Langmuir-Blodgett (LB) method may be used for the aforementioned measurement. The substrate used for the measurement is preferably a highly flat substrate, such as a silicon substrate or a mica substrate. In the present invention, each of the major axis length and thickness of the exfoliated particles (C) may be the average of 20 to 30 values measured by the aforementioned method.

The aforementioned interlayer exfoliated particles (C) have an average aspect ratio (major axis length/thickness ratio) of preferably 200 to 4,000, more preferably 400 to 3,000. An average aspect ratio of less than 200 leads to impairment of film formability and barrier property, whereas an average aspect ratio of more than 4,000 leads to deterioration of dispersion stability, which is not preferred.

The aforementioned interlayer exfoliated particles (C) preferably have a planar-direction shape so as to maintain that before the interlayer exfoliation. In particular, the exfoliated particles (C) preferably have a rectangular or square plate-like shape from the viewpoint of barrier properties. However, no particular limitation is imposed on the shape of the exfoliated particles (C), so long as they have a plate-like shape, and the exfoliated particles (C) may have a shape with missing of a portion of a quadrangle [e.g., rectangle or square].

In the present invention, the aforementioned interlayer exfoliated particles (C) may be coated with a silane compound. In this case, Si^{A}-O-Si^{B} bonds (wherein Si^{A} denotes an Si atom in the exfoliated particles, and Si^{B} denotes an Si atom in the silane compound) can be formed on the surfaces of the exfoliated particles (C). The silane compound may be a hydrolysis condensate thereof.

The aforementioned silane compound may be, for example, at least one compound selected from the group consisting of a silicon-containing compound of the following Formula (1) and a silicon-containing compound of the following Formula (2), and a hydrolysis condensate of the compound.

**R¹ₐSi(R²)₄₋ₐ** Formula (1)

**[R³**_{b}**Si(R⁴)₃-_{b} ]₂Y_{c}** Formula (2)

In Formula (1), R¹ is an acryloxy group, a methacryloxy group, an aryl group, an alkyl group, a halogenated alkyl group, an alkenyl group, a glycidoxy group, a C₁₋₁₀ alkyl group containing such a functional group, or an organic group having an epoxy group, an acryloyl group, a methacryloyl group, a mercapto group, an alkoxy group, or a cyano group, and is bonded to the Si atom in the formula via an Si-C bond; and a is an integer of 1 to 3.

R² is a hydrolyzable group selected from among an alkoxy group, an aryloxy group, an aralkyloxy group, an acyloxy group, or a halogen atom. At least one R² (hydrolyzable group) forms an Si^{A}-O-Si bond (wherein Si^{A} denotes an Si atom in the exfoliated particles, and Si denotes the Si atom bonded to R² in Formula (1)) on the surfaces of the aforementioned interlayer exfoliated particles (C).

In Formula (2), R³ is an alkyl group and is bonded to the Si atom in the formula via an Si-C bond.

R⁴ is hydrolyzable group seleted from among an alkoxy group, an acyloxy group, or a halogen atom. At least one R⁴ (hydrolyzable group) forms an Si^{A}-O-Si bond (wherein Si^{A} denotes an Si atom in the exfoliated particles, and Si denotes the Si atom bonded to R⁴ in Formula (2)) on the surfaces of the aforementioned interlayer exfoliated particles (C).

Y is an alkylene group, an arylene group, an NH group, or an oxygen atom; b is an integer of 0 to 3; and c is an integer of 0 or 1.

Examples of the silicon-containing compound of Formula (1) include tetramethoxysilane, tetrachlorosilane, tetraacetoxysilane, tetraethoxysilane, tetra-n-propoxysilane, tetraisopropoxysilane, tetra-n-butoxysilane, methyltrimethoxysilane, methyltrichlorosilane, methyltriacetoxysilane, methyltripropoxysilane, methyltributoxysilane, methyltriamyloxysilane, methyltriphenoxysilane, methyltribenzyloxysilane, methyltriphenethyloxysilane, glycidoxymethyltrimethoxysilane, glycidoxymethyltriethoxysilane, α-glycidoxyethyltrimethoxysilane, α-glycidoxyethyltriethoxysilane, β-glycidoxyethyltrimethoxysilane, β-glycidoxyethyltriethoxysilane, α-glycidoxypropyltrimethoxysilane, α-glycidoxypropyltriethoxysilane, β-glycidoxypropyltrimethoxysilane, β-glycidoxypropyltriethoxysilane, γ-glycidoxypropyltrimethoxysilane, γ-glycidoxypropyltriethoxysilane, γ-glycidoxypropyltripropoxysilane, γ-glycidoxypropyltributoxysilane, γ-glycidoxypropyltriphenoxysilane, α-glycidoxybutyltrimethoxysilane, α-glycidoxybutyltriethoxysilane, β-glycidoxybutyltriethoxysilane, γ-glycidoxybutyltrimethoxysilane, γ-glycidoxybutyltriethoxysilane, δ-glycidoxybutyltrimethoxysilane, δ-glycidoxybutyltriethoxysilane, (3,4-epoxycyclohexyl)methyltrimethoxysilane, (3,4-epoxycyclohexyl)methyltriethoxysilane, β-(3,4-epoxycyclohexyl)ethyltrimethoxysilane, β-(3,4-epoxycyclohexyl)ethyltriethoxysilane, β-(3,4-epoxycyclohexyl)ethyltripropoxysilane, β-(3,4-epoxycyclohexyl)ethyltributoxysilane, β-(3,4-epoxycyclohexyl)ethyltriphenoxysilane, γ-(3,4-epoxycyclohexyl)propyltrimethoxysilane, γ-(3,4-epoxycyclohexyl)propyltriethoxysilane, δ-(3,4-epoxycyclohexyl)butyltrimethoxysilane, δ-(3,4-epoxycyclohexyl)butyltriethoxysilane, glycidoxymethylmethyldimethoxysilane, glycidoxymethylmethyldiethoxysilane, α-glycidoxyethylmethyldimethoxysilane, α-glycidoxyethylmethyldiethoxysilane, β-glycidoxyethylmethyldimethoxysilane, β-glycidoxyethylethyldimethoxysilane, α-glycidoxypropylmethyldimethoxysilane, α-glycidoxypropylmethyldiethoxysilane, β-glycidoxypropylmethyldimethoxysilane, β-glycidoxypropylethyldimethoxysilane, γ-glycidoxypropylmethyldimethoxysilane, γ-glycidoxypropylmethyldiethoxysilane, γ-glycidoxypropylmethyldipropoxysilane, γ-glycidoxypropylmethyldibutoxysilane, γ-glycidoxypropylmethyldiphenoxysilane, γ-glycidoxypropylethyldimethoxysilane, γ-glycidoxypropylethyldiethoxysilane, γ-glycidoxypropylvinyldimethoxysilane, γ-glycidoxypropylvinyldiethoxysilane, ethyltrimethoxysilane, ethyltriethoxysilane, vinyltrimethoxysilane, vinyltrichlorosilane, vinyltriacetoxysilane, vinyltriethoxysilane, methoxyphenyltrimethoxysilane, methoxyphenyltriethoxysilane, methoxyphenyltriacetoxysilane, methoxyphenyltrichlorosilane, methoxybenzyltrimethoxysilane, methoxybenzyltriethoxysilane, methoxybenzyltriacetoxysilane, methoxybenzyltrichlorosilane, methoxyphenethyltrimethoxysilane, methoxyphenethyltriethoxysilane, methoxyphenethyltriacetoxysilane, methoxyphenethyltrichlorosilane, ethoxyphenyltrimethoxysilane, ethoxyphenyltriethoxysilane, ethoxyphenyltriacetoxysilane, ethoxyphenyltrichlorosilane, ethoxybenzyltrimethoxysilane, ethoxybenzyltriethoxysilane, ethoxybenzyltriacetoxysilane, ethoxybenzyltrichlorosilane, isopropoxyphenyltrimethoxysilane, isopropoxyphenyltriethoxysilane, isopropoxyphenyltriacetoxysilane, isopropoxyphenyltrichlorosilane, isopropoxybenzyltrimethoxysilane, isopropoxybenzyltriethoxysilane, isopropoxybenzyltriacetoxysilane, isopropoxybenzyltrichlorosilane, t-butoxyphenyltrimethoxysilane, t-butoxyphenyltriethoxysilane, t-butoxyphenyltriacetoxysilane, t-butoxyphenyltrichlorosilane, t-butoxybenzyltrimethoxysilane, t-butoxybenzyltriethoxysilane, t-butoxybenzyltiiacetoxysilane, t-butoxybenzyltrichlorosilane, methoxynaphthyltrimethoxysilane, methoxynaphthyltriethoxysilane, methoxynaphthyltriacetoxysilane, methoxynaphthyltrichlorosilane, ethoxynaphthyltrimethoxysilane, ethoxynaphthyltriethoxysilane, ethoxynaphthyltriacetoxysilane, ethoxynaphthyltrichlorosilane, γ-chloropropyltrimethoxysilane, γ-chloropropyltriethoxysilane, γ-chloropropyltriacetoxysilane, 3,3,3-trifluoropropyltrimethoxysilane, γ-methacryloxypropyltrimethoxysilane, γ-mercaptopropyltrimethoxysilane, γ-mercaptopropyltriethoxysilane, β-cyanoethyltriethoxysilane, chloromethyltrimethoxysilane, chloromethyltriethoxysilane, dimethyldimethoxysilane, phenylmethyldimethoxysilane, dimethyldiethoxysilane, phenylmethyldiethoxysilane, γ-chloropropylmethyldimethoxysilane, γ-chloropropylmethyldiethoxysilane, dimethyldiacetoxysilane, γ-methacryloxypropylmethyldimethoxysilane, γ-methacryloxypropylmethyldiethoxysilane, γ-mercaptopropylmethyldimethoxysilane, γ-mercaptomethyldiethoxysilane, methylvinyldimethoxysilane, and methylvinyldiethoxysilane.

Examples of the silicon-containing compound of Formula (2) include methylenebistrimethoxysilane, methylenebistrichlorosilane, methylenebistriacetoxysilane, ethylenebistriethoxysilane, ethylenebistrichlorosilane, ethylenebistriacetoxysilane, propylenebistriethoxysilane, butylenebistrimethoxysilane, phenylenebistrimethoxysilane, phenylenebistriethoxysilane, phenylenebismethyldiethoxysilane, phenylenebismethyldimethoxysilane, naphthylenebistrimethoxysilane, bistrimethoxydisilane, bistriethoxydisilane, bisethyldiethoxydisilane, bismethyldimethoxydisilane, hexamethyldisilane, hexamethyldisilazane, and hexamethyldisiloxane.

The hydrolysis condensate of hydrolyzable silane is prepared by hydrolysis and condensation of the aforementioned silicon-containing compound.

The aforementioned silicon-containing compound contains an alkoxy group, aralkyloxy group, acyloxy group, or halogen atom directly bonded to the silicon atom; i.e., an alkoxysilyl group, an aralkyloxysilyl group, an acyloxysilyl group, or a halogenated silyl group (hereinafter such a group may be referred to as "hydrolyzable group-containing silyl group"). For the hydrolysis of the hydrolyzable group-containing silyl group, generally 0.5 mol to 100 mol, preferably 1 mol to 10 mol of water is used per mol of the hydrolyzable group-containing silyl group.

A hydrolysis catalyst may be used during the hydrolysis and condensation for the purpose of, for example, promoting the reaction. When a hydrolysis catalyst is used, the amount of the hydrolysis catalyst may be 0.001 mol to 10 mol, preferably 0.001 mol to 1 mol per mol of the hydrolyzable group-containing silyl group. The aforementioned hydrolysis catalyst used is, for example, nitric acid, which may be used in combination with a metal chelate compound, an organic acid, an inorganic acid, an organic base, or an inorganic base.

The reaction temperature for the hydrolysis and condensation is generally about 20°C to 80°C. The hydrolysis may be performed completely; i.e., all hydrolyzable group-containing silyl groups may be converted into silanol groups, or may be performed partially; i.e., unreacted hydrolyzable group-containing silyl groups may remain. Thus, a hydrolysate or the aforementioned silane compound (i.e., monomer) may remain in the resultant hydrolysis condensate.

### Aqueous C₁₋₃ Alcohol Solution (D)

In the aforementioned aqueous alcohol solution (D), the alcohol plays a role in maintaining the particle shape during interlayer exfoliation of the protonic layered polysilicate compound (B), and preferably has high solubility in water. Thus, the present invention involves the use of the aqueous C₁₋₃ alcohol solution (D).

No particular limitation is imposed on the alcohol used in the aqueous C₁₋₃ alcohol solution (D). Specific examples of the alcohol include methanol (methyl alcohol), ethanol (ethyl alcohol), 1-propanol (1-propyl alcohol), and 2-propanol (isopropyl alcohol). The aforementioned aqueous alcohol solutions (D) may be used alone or in combination of two or more species.

The alcohol concentration of the aforementioned aqueous alcohol solution (D) is 5 vol% to 95 vol%, more preferably 10 vol% to 90 vol%. When the alcohol concentration is less than 5 vol%, the interlayer exfoliation proceeds, but the exfoliated particles exhibit impaired particle shape maintainability, resulting in a very small major axis length. Meanwhile, when the alcohol concentration is more than 95 vol%, the interlayer exfoliation per se becomes hard to proceed, which is not preferred.

### Film-Forming Composition and Porous Body-Forming Composition

Each of the film-forming composition and porous body-forming composition of the present invention is a composition wherein at least the exfoliated particles (C) are dispersed in a dispersion medium. Thus, the exfoliated particle dispersion of the present invention may be used as is as a film-forming composition and a porous body-forming composition. The aforementioned dispersion medium may be an aqueous medium (e.g., water) or an organic solvent. Examples of the organic solvent include monohydric alcohol solvents, such as methanol, ethanol, 1-propanol, 2-propanol, butanol, tert-butanol, 4-methyl-2-pentanol, and diacetone alcohol; polyhydric alcohol solvents, such as ethylene glycol and propylene glycol; ether and ester solvents, such as ethylene glycol monomethyl ether, ethylene glycol monoethyl ether, ethylene glycol monopropyl ether, ethylene glycol monobutyl ether, ethylene glycol monomethyl ether acetate, ethylene glycol monoethyl ether acetate, ethylene glycol monopropyl ether acetate, ethylene glycol monobutyl ether acetate, diethylene glycol dimethyl ether, diethylene glycol diethyl ether, diethylene glycol dipropyl ether, diethylene glycol dibutyl ether, propylene glycol monomethyl ether, propylene glycol monoethyl ether, propylene glycol monopropyl ether, propylene glycol monobutyl ether, propylene glycol dimethyl ether, propylene glycol diethyl ether, propylene glycol dipropyl ether, propylene glycol dibutyl ether, propylene glycol monomethyl ether acetate, propylene glycol monoethyl ether acetate, propylene glycol monopropyl ether acetate, propylene glycol monobutyl ether acetate, ethyl 2-hydroxypropionate, ethyl 2-hydroxy-2-methylpropionate, ethyl ethoxyacetate, ethyl hydroxyacetate, methyl 2-hydroxy-3-methylbutanoate, methyl 3-methoxypropionate, ethyl 3-methoxypropionate, ethyl 3-ethoxypropionate, methyl 3-ethoxypropionate, and γ-butyrolactone; and nitrogen-containing solvents, such as N-methyl-2-pyrrolidone. These dispersion media may be used alone or in combination of two or more species. The exfoliated particle dispersion of the present invention may be subjected to solvent replacement to thereby produce each of the film-forming composition and porous body-forming composition of the present invention. The solvent replacement may be performed by means of, for example, filtration, ultrafiltration, decantation, centrifugation, or an evaporator.

The amount of the solid content of each of the aforementioned film-forming composition and porous body-forming composition may be, for example, 0.1% by mass to 30% by mass. The term "solid content" as used herein refers to all components (except for the dispersion medium, such as water or an organic solvent) contained in each of the film-forming composition and the porous body-forming composition. The solid content contains the exfoliated particles (C) as an essential component.

In each of the film-forming composition and porous body-forming composition of the present invention, unnecessary components (except for the exfoliated particles (C)) contained in the dispersion medium (liquid medium) may be removed. Unnecessary components may be removed by means of, for example, an adsorbent, ion exchange, a flocculant, crystallization, filtration, ultrafiltration, decantation, centrifugation, or an evaporator.

An additive may be added to each of the film-forming composition and porous body-forming composition of the present invention. Examples of the additive include a resin, a binder, a leveling improver, a film durability improver, an antioxidant, an antitarnish agent, an ultraviolet absorber, a stabilizer, a plasticizer, an antifoaming agent, a reinforcing agent, a dye, and a pigment. The type, number, and amount of the additive incorporated into each of the film-forming composition and the porous body-forming composition are appropriately determined in accordance with the intended use of the composition.

When each of the film-forming composition and porous body-forming composition of the present invention is prepared, the pH of the composition may be adjusted to 2 to 13. A pH of lower than 2 may lead to poor dispersion stability, whereas a pH of higher than 13 may lead to dissolution of the exfoliated particles (C).

When a film is formed from the film-forming composition, the viscosity of the film-forming composition may be controlled for regulating the thickness of the film. The viscosity of the film-forming composition may be adjusted to 0.5 mPa·s to 50,000 mPa·s, more preferably 1 mPa-s to 10,000 mPa·s.

### LB Film, Coating Film, and Free-Standing Membrane

The term "LB film" or "coating film" as used herein refers to a film containing at least the exfoliated particles (C). The "LB film" refers to a film formed (transferred) on a substrate by the LB method, and the "coating film" refers to a film formed on a substrate by coating.

The term "free-standing membrane" as used herein refers to a film containing at least the exfoliated particles (C). The "free-standing membrane" refers to a film that does not require the support of a substrate.

For example, each of the aforementioned LB film, coating film, and free-standing membrane may be formed from the aforementioned film-forming composition or exfoliated particle dispersion as described below.

These terms "LB film," "coating film," and "free-standing membrane" are used for simply referring to film-like products. Thus, the terms "LB film," "coating film," and "free-standing membrane" are not intended to limit their thicknesses. Each of these "LB film," "coating film," and "free-standing membrane" may contain components (e.g., the nitrogen-containing basic compound (A) or a solvent) other than the exfoliated particles (C) contained in the film-forming composition or exfoliated particle dispersion used for film formation.

Any common substrate is used as the substrate to which the film-forming composition or the exfoliated particle dispersion is applied for forming the coating film. Examples of the substrate include substrates of metal, plastic, organic resin, glass, and ceramic.

The coating film may be formed on the aforementioned substrate by applying the film-forming composition or the exfoliated particle dispersion thereto by any of known methods, such as spin coating, dipping, doctor blading, screen coating, roll coating, spray coating, die coating, electrodeposition coating, and casting.

For example, a silicon substrate or a mica substrate is used as the substrate to which the film-forming composition or the exfoliated particle dispersion is transferred by the LB method for forming the LB film.

The LB film may be formed (transferred) on the aforementioned substrate by transferring the film-forming composition or the exfoliated particle dispersion thereto by the known LB method.

After formation of the LB film or the coating film on the aforementioned substrate, the solvent may be arbitrarily removed from the film by any known appropriate drying method. Examples of the drying method include natural drying, air drying, heat drying, reduced-pressure drying, reduced-pressure heat drying, reduced-pressure freeze drying, and supercritical drying. In the case of, for example, heat drying, the drying temperature is typically 80°C to 200°C, and the drying time is 1 minute to 120 minutes.

After being dried, the LB film or the coating film may be further subjected to thermal treatment. The thermal treatment may be performed by any appropriate method. The thermal treatment temperature is typically 100°C to 400°C, and the thenal treatment time is 1 minute to 120 minutes.

The free-standing membrane may be generally formed by a process wherein the aforementioned film-forming composition or exfoliated particle dispersion is applied to a substrate to thereby form a coating film, or an LB film is formed (transferred) onto a substrate by the LB method; an organic solvent or water is removed from the resultant film by drying or a similar method; and the film is subjected to thermal treatment if desired, and then removed from the substrate.

When the mechanical strength of the coating film is secured by the resin component, etc. contained in the film, or when the solvent is removed (evaporated) such that the film can stand on its own simultaneously with formation of the film by, for example, spin coating or dipping, the free-standing membrane may be prepared without being subjected to a drying process.

The substrate used for formation of the free-standing membrane may be the substrate exemplified above in the description of the coating film or the LB film, and the substrate coating, drying, and thermal treatment methods used for formation of the free-standing membrane may be the methods exemplified above in the description of the LB film or the coating film.

The LB film, coating film, or free-standing membrane of the present invention has a thickness of preferably 0.5 nm to 1 mm, more preferably 0.5 nm to 100 µm. The thickness of each film may be determined in accordance with the intended use thereof.

### Proton Conductor, Electrolyte Film for Fuel Cell

The LB film, coating film, or free-standing membrane of the present invention may be used as a proton conductor. In general, "proton conductor" is a type of ion conductor and refers to a substance that conducts protons (hydrogen ions: H⁺).

The aforementioned proton conductor may be used as an electrolyte film for a fuel cell. In a fuel cell using the proton conductor, protons are generated from a fuel gas such as hydrogen (H₂) at the anode, and the protons are transported to the cathode by the proton conductor and then reacted with oxygen (O₂) at the cathode. Thus, the fuel cell operates by this process.

### Porous Body

The term "porous body" as used herein refers to a porous body containing at least the exfoliated particles (C). The porous body of the present invention may be produced by removing the solvent from the porous body-forming composition or exfoliated particle dispersion described above.

The solvent may be arbitrarily removed by any known appropriate method. Examples of the method of removing the solvent include natural drying, air drying, heat drying, reduced-pressure drying, reduced-pressure heat drying, reduced-pressure freeze drying, and supercritical drying. In the case of, for example, reduced-pressure freeze drying, the temperature is typically -40°C to -80°C, the pressure is 4 Pa to 100 Pa, and the drying time is one hour to three days.

The nitrogen-containing basic compound (A) or the solvent may partially remain in the porous body of the present invention.

### Examples

The present invention will next be described in detail by way of Examples, but the present invention should not be construed as being limited to the Examples.

### (Evaluation Methods)

### <Identification of Crystal Phase>

Dry powder was analyzed with a desktop X-ray diffractometer (XRD, trade name: MiniFlex 600, available from Rigaku Corporation), to thereby identify a crystal phase.

### <Average Major Axis Length and Average Thickness of Particles>

Particles were placed onto a silicon substrate (available from ELECTRONICS AND MATERIALS CORPORATION LIMITED, single-crystal, 100 plane, mirror finished) by dropping and drying a methanol solution of a powder sample as described below (in the case of particles of Na-type octosilicate and protonic octosilicate before interlayer exfoliation) or by the below-described LB film formation method (in the case of particles contained in an exfoliated particle dispersion of each of Examples and Comparative Examples), and the major axis lengths and thicknesses of the particles were measured by observation of the particles with an ultra-high resolution filed emission scanning electron microscope (FE-SEM, trade name: SU8000, available from Hitachi High-Tech Science Corporation) (secondary electron image, acceleration voltage: 5 to 15 kV, observation magnification: 5,000 to 120,000), or by observation of the particles with a scanning probe microscope (SPM, trade name: Nanocute/NanoNavi II, available from Hitachi High-Tech Science Corporation) and a cantilever (probe) made of silicon (trade name: SI-DF20, available from Hitachi High-Tech Science Corporation, spring constant: 15 N/m, resonance frequency: 110 to 150 kHz) (DFM mode, scanning rate: 0.2 to 0.5 Hz).

In each case, the major axis lengths and thicknesses of 20 to 30 particles were measured, to thereby calculate the average major axis length and the average thickness. When the particles were not successfully observed, evaluation "Absence" was given.

### <Dispersibility>

An exfoliated particle dispersion was irradiated with light having a wavelength of 532 nm by use of a green laser pointer, and occurrence of the Tyndall phenomenon was visually observed, to thereby evaluate the dispersibility of exfoliated particles. Rating "O" was given when the Tyndall phenomenon was observed, whereas rating "×" was given when the Tyndall phenomenon was not observed (i.e., determination of no interlayer exfoliation).

### <Average Thickness of Coating Film or Free-Standing Membrane>

The average thickness was measured through observation with the aforementioned FE-SEM (secondary electron image, acceleration voltage: 5 to 15 kV, observation magnification: 5,000 to 120,000).

### <Specific Surface Area>

The specific surface area of dry powder was measured by the BET multipoint method with an automatic specific surface area/pore distribution measuring device (trade name: TriStar II 3020 Surface Area and Porosity, available from Micromeritics) using nitrogen (N₂) gas.

The dry powder was pulverized with a mortar before measurement, and the pulverized powder was sufficiently dried with an oven at 200°C, followed by analysis.

### <Proton Conductivity>

A proton conductor was formed on comb-shaped electrodes (trade name: 012264, available from BAS, made of Pt, no insulating film, electrode width: 2 µm, electrode height: 90 nm, pitch width: 2 µm, number of electrode pairs: 65), and the resistance (R) of the proton conductor was measured with an impedance measuring device (trade name: Solartron (registered trademark) SI1260, available from TOYO Corporation). The conductivity (σ) was calculated from the measured resistance (R), to thereby evaluate proton conductivity.

In the case of evaluation of the relative humidity dependence or temperature dependence of the conductivity (σ), the comb-shaped electrodes on which the proton conductor was formed were placed in a small environmental tester (trade name: SH-221, available from ESPEC Corp.) for measurement.

In the case of evaluation of the H₂O/D₂O ratio dependence of the conductivity (σ), the comb-shaped electrodes on which the proton conductor was formed were immersed in 10 mL of H₂O/D₂O mixtures having different mixing ratios, and then placed in a constant-temperature dryer (trade name: ETTAS (registered trademark) EO-300B, available from AS ONE CORPORATION) for measurement.

### <Power Generation Properties of Electrolyte Film for Fuel Cell>

An anode was attached to the front surface of an electrolyte film, and a cathode was attached to the back surface thereof. An insulating plate, a current collector, an insulating plate, and a separator were provided in this order from the electrolyte film side, to thereby prepare a cell for fuel cell evaluation having an electrode area of 1 cm². The electrode catalyst used for the anode and cathode was a carbon paper supporting thereon platinum (Pt)/carbon (C) (amount: 0.5 mg/cm²) prepared by dropping of a catalyst ink. The catalyst ink was prepared by mixing of 0.1 g of Pt/C (Pt content: 46.3 wt%), 1 g of 5 wt% Nafion dispersion, and 2 mL of pure water, and ultrasonic treatment of the mixture, followed by stirring with a stirrer.

For evaluation of power generation properties, I-V curves were measured under the following conditions: cell temperature: 70°C, humidity: 100%, hydrogen (H₂) gas flow rate: 20 mL/min, oxygen (O₂) gas flow rate: 20 mL/min, to thereby calculate electromotive force (V), current (I), resistance (R), conductivity (σ), and output density.

### (Particle Synthesis Example 1: Synthesis of Octosilicate)

Silica sol (trade name: SNOWTEX (registered trademark) ST-O, available from Nissan Chemical Corporation) was added to commercially available aqueous sodium silicate solution No. 3, to thereby prepare an aqueous sodium silicate solution having adjusted ratio by mole (SiO₂/Na₂O ratio by mole: 3.7, SiO₂ concentration: 22.8% by mass, Na₂O concentration: 6.4% by mass). Subsequently, 2,400 g of the prepared aqueous sodium silicate solution was added to a hermetic pressure-resistant container (volume: 3 L) made of stainless steel (SUS316) and heated at 110°C for 12 days, to thereby synthesize Na-type octosilicate. The resultant Na-type octosilicate particles were separated with a quantitative filter paper (model: No. 5B), sufficiently washed with deionized water, and then dried at 40°C, to thereby prepare a powder sample.

The X-ray diffraction pattern of the resultant powder sample was measured with an XRD, and the sample was found to have an Na-type octosilicate single phase (PDF card No. 00-048-0655). Subsequently, 0.6 mg of the powder sample (Na-type octosilicate) was added to 2 mL of methanol, and dispersed therein by shaking. The resultant dispersion was dropped onto a silicon substrate, and then dried with heating at 100°C. The resultant particles (powder sample: Na-type octosilicate) were found to have an average major axis length of 4.34 µm and an average thickness of 193 nm as measured with an FE-SEM.

Subsequently, 1 g of the resultant Na-type octosilicate powder sample was added to 200 mL of 0.1 mol/L nitric acid, and the mixture was stirred with a stirrer at room temperature for 30 minutes. Thereafter, the mixture was allowed to stand still for 24 hours, to thereby prepare protonic octosilicate particles. The resultant protonic octosilicate particles were separated with a quantitative filter paper (model: No. 5B), sufficiently washed with deionized water, and then sufficiently dried at 40°C, to thereby prepare a powder sample.

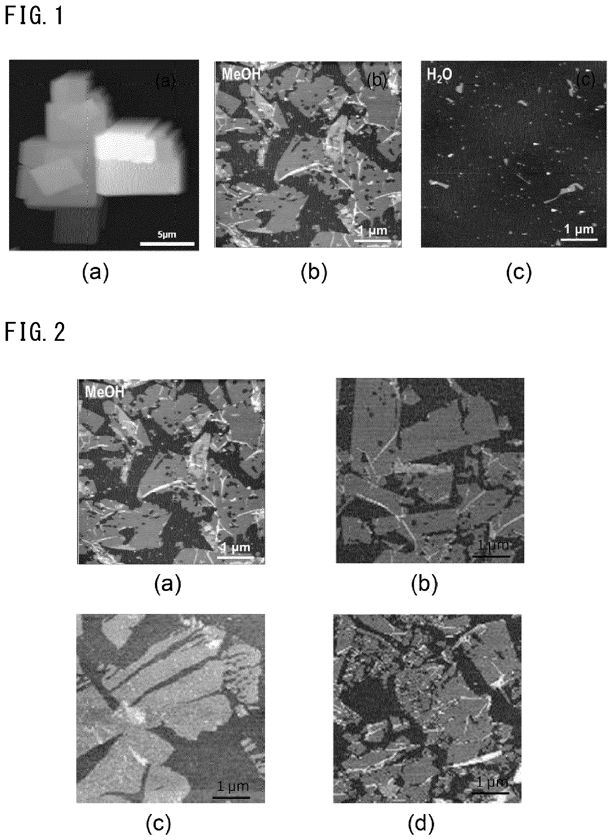

The X-ray diffraction pattern of the resultant powder sample was measured with an XRD, and the sample was found to have a protonic octosilicate single phase (PDF card No. 00-047-0731). The powder sample (protonic octosilicate) was subjected to specific surface area measurement with an automatic specific surface area/pore distribution measuring device, and the powder sample was found to have a specific surface area of 11.7 m²/g. Subsequently, 0.6 mg of the powder sample (protonic octosilicate) was added to 2 mL of methanol, and dispersed therein by shaking. The resultant dispersion was dropped onto a silicon substrate, and then dried with heating at 100°C. The resultant particles (powder sample: protonic octosilicate) were found to have an average major axis length of 4.40 µm and an average thickness of 128 nm as measured with an FE-SEM. FIG. 1(a) shows an SPM image of the resultant protonic octosilicate powder.

### (Particle Synthesis Example 2: Synthesis of Octosilicate)

Firstly, 2.7 g of the Na-type octosilicate powder sample prepared in Particle Synthesis Example 1 and 1,042 g of zirconia-made pulverizing balls (diameter: 1 mm) were added to a sand grinder, and dry pulverization was performed at a rotation speed of 2,400 rpm for three hours.

Subsequently, 0.5 g of the resultant Na-type octosilicate pulverized particles, serving as seed crystals (seed particles), were added to 50 g of the aforementioned aqueous sodium silicate solution having adjusted ratio by mole (SiO₂/Na₂O ratio by mole: 3.7, SiO₂ concentration: 22.8% by mass, Na₂O concentration: 6.4% by mass), and the mixture was added to a hermetic pressure-resistant container (volume: 100 mL) made of stainless steel (SUS304) and heated at 110°C for four days, to thereby synthesize Na-type octosilicate.

The resultant Na-type octosilicate particles were separated with a quantitative filter paper (model: No. 5B), sufficiently washed with deionized water, and then sufficiently dried at 40°C, to thereby prepare a powder sample. The X-ray diffraction pattern of the resultant powder sample was measured with an XRD, and the sample was found to have an Na-type octosilicate single phase (PDF card No. 00-048-0655).

Subsequently, 1 g of the resultant Na-type octosilicate powder sample was added to 200 mL of 0.1 mol/L nitric acid, and the mixture was stirred with a stirrer at room temperature for 30 minutes. Thereafter, the mixture was allowed to stand still for 24 hours, to thereby prepare protonic octosilicate particles. The resultant protonic octosilicate particles were separated with a quantitative filter paper (model: No. 5B), sufficiently washed with deionized water, and then sufficiently dried at 40°C, to thereby prepare a powder sample.

The X-ray diffraction pattern of the resultant powder sample was measured with an XRD, and the sample was found to have a protonic octosilicate single phase (PDF card No. 00-047-0731). The powder sample (protonic octosilicate) was placed on a silicon substrate in the same manner as in Particle Synthesis Example 1. The particles (powder sample: protonic octosilicate) were found to have an average major axis length of 2.43 µm and an average thickness of 61 nm as measured with an FE-SEM.

### (Example 1: Production of Dispersion of Interlayer Exfoliated Particles, and Production of LB Film)

The protonic octosilicate powder prepared in Particle Synthesis Example 1 was added to methanol, and 11 mol/L aqueous tetrabutylammonium hydroxide solution and water were added to the mixture, so that the tetrabutylammonium hydroxide concentration was adjusted to 0.05 mol/L, the protonic octosilicate concentration was adjusted to 1.5 g/L, and the methanol concentration was adjusted to 50 vol%, to thereby prepare a raw material liquid. Thereafter, the raw material liquid was slightly shaken, and then the raw material liquid was subjected to ultrasonic treatment with an ultrasonic washer (trade name: US-10NS, available from SND, output: 240 W) for 18 hours. The liquid temperature after the ultrasonic treatment was about 40°C. Subsequently, 50 mL of the liquid was subjected to centrifugal treatment with a tabletop centrifuge (trade name: Model 2410, available from KUBOTA CORPORATION) at a rotation speed of 2,000 rpm for 30 minutes. The resultant supernatant was recovered, and extra foreign matter was removed, to thereby produce an exfoliated particle dispersion E1.

The thus-produced exfoliated particle dispersion E1 was irradiated with light having a wavelength of 532 nm by use of a green laser pointer, and the Tyndall phenomenon was determined; i.e., good dispersibility was achieved. The exfoliated particle dispersion E1 was diluted 60 to 300 times with water, and 300 mL of the diluted dispersion was poured into a trough of a Langmuir-Blodgett (LB) film formation device (trade name: USI-3-22-WKI, available from USI Corp.). After the diluted dispersion was allowed to stand still for one hour or more, a barrier made of Teflon (registered trademark) was compressed to a position at which the surface pressure was 5 to 10 mN/m, and exfoliated particles floating on the liquid surface were caused to adhere to a silicon substrate, to thereby form an LB film of exfoliated particles on the silicon substrate. The LB film of exfoliated particles formed on the silicon substrate was heated at 80 to 300°C to thereby remove water, and then the resultant film was observed with an SPM. As a result, exfoliated particles were determined, and the exfoliated particles were found to have an average major axis length of 1.56 µm and an average thickness of 1.5 nm. FIG. 1(b) (and FIG. 2(a)) show SPM images of the resultant exfoliated particles. The results are shown in Table 1.

### (Example 2)

The same operation as in Example 1 was performed, except that the protonic octosilicate prepared in Particle Synthesis Example 1 was replaced with the protonic octosilicate prepared in Particle Synthesis Example 2, to thereby produce an exfoliated particle dispersion E2. The Tyndall phenomenon was determined in the exfoliated particle dispersion E2; i.e., good dispersibility was achieved. An LB film was formed through the same procedure as described above. The film was observed with an SPM, and as a result, exfoliated particles were determined. The exfoliated particles were found to have an average major axis length of 0.66 µm and an average thickness of 1.4 nm. The results are shown in Table 1.

### (Example 3)

The same operation as in Example 1 was performed, except that tetrabutylammonium hydroxide was replaced with tetrapropylammonium hydroxide, to thereby produce an exfoliated particle dispersion E3. The Tyndall phenomenon was determined in the exfoliated particle dispersion E3; i.e., good dispersibility was achieved. An LB film was formed through the same procedure as described above. The film was observed with an SPM, and as a result, exfoliated particles were determined. The exfoliated particles were found to have an average major axis length of 1.48 µm and an average thickness of 1.1 nm. FIG. 2(b) shows an SPM image of the resultant exfoliated particles. The results are shown in Table 1.

### (Example 4)

The same operation as in Example 1 was performed, except that tetrabutylammonium hydroxide was replaced with tributylamine, to thereby produce an exfoliated particle dispersion E4. The Tyndall phenomenon was determined in the exfoliated particle dispersion E4; i.e., good dispersibility was achieved. An LB film was formed through the same procedure as described above. The film was observed with an SPM, and as a result, exfoliated particles were determined. The exfoliated particles were found to have an average major axis length of 1.91 µm and an average thickness of 0.7 nm. FIG. 2(c) shows an SPM image of the resultant exfoliated particles. The results are shown in Table 1.

### (Comparative Example 1)

The same operation as in Example 1 was performed, except that methanol was not used. The Tyndall phenomenon was determined in the resultant dispersion C1; i.e., good dispersibility was achieved. An LB film was formed through the same procedure as described above. The film was observed with an SPM, and as a result, exfoliated particles were determined. The exfoliated particles were found to have an average major axis length of 0.30 µm and an average thickness of 1.8 nm. FIG. 1(c) shows an SPM image of the resultant exfoliated particles. The results are shown in Table 1.

### (Comparative Example 2)

The same operation as in Example 1 was performed, except that tetrabutylammonium hydroxide was replaced with tetraethylammonium hydroxide. The Tyndall phenomenon was not determined in the resultant dispersion C2; i.e., exfoliation did not proceed. An LB film was formed through the same procedure as described above. The film was observed with an SPM, and as a result, no exfoliated particles were determined. The results are shown in Table 1.

### (Comparative Example 3)

The same operation as in Example 1 was performed, except that tetrabutylammonium hydroxide was replaced with tetramethylammonium hydroxide. The Tyndall phenomenon was not determined in the resultant dispersion C3; i.e., exfoliation did not proceed. An LB film was formed through the same procedure as described above. The film was observed with an SPM, and as a result, no exfoliated particles were determined. The results are shown in Table 1.

### (Comparative Example 4)

The same operation as in Example 1 was performed, except that tetrabutylammonium hydroxide was replaced with dibutylamine. The Tyndall phenomenon was not determined in the resultant dispersion C4; i.e., exfoliation did not proceed. An LB film was formed through the same procedure as described above. The film was observed with an SPM, and as a result, no exfoliated particles were determined. The results are shown in Table 1.

### (Comparative Example 5)

The same operation as in Example 1 was performed, except that tetrabutylammonium hydroxide was replaced with monobutylamine. The Tyndall phenomenon was not determined in the resultant dispersion C5; i.e., exfoliation did not proceed. An LB film was formed through the same procedure as described above. The film was observed with an SPM, and as a result, no exfoliated particles were determined. The results are shown in Table 1.

### (Comparative Example 6)

The same operation as in Example 1 was performed, except that tetrabutylammonium hydroxide was replaced with tetrabutylammonium hydrogen sulfate. The Tyndall phenomenon was not determined in the resultant dispersion C6; i.e., exfoliation did not proceed. An LB film was formed through the same procedure as described above. The film was observed with an FE-SEM, and as a result, no exfoliated particles were determined. The results are shown in Table 1.

### (Comparative Example 7)

The same operation as in Example 1 was performed, except that tetrabutylammonium hydroxide was not used. The Tyndall phenomenon was not determined in the resultant dispersion C7; i.e., interlayer exfoliation did not proceed. An LB film was formed through the same procedure as described above. The film was observed with an FE-SEM, and as a result, no exfoliated particles were determined. The results are shown in Table 1.

### (Comparative Example 8)

The same operation as in Example 1 was performed, except that the protonic octosilicate prepared in Particle Synthesis Example 1 was replaced with the Na-type octosilicate prepared in Particle Synthesis Example 1. The Tyndall phenomenon was not determined in the resultant dispersion C8; i.e., interlayer exfoliation did not proceed. An LB film was formed through the same procedure as described above. The film was observed with an FE-SEM, and as a result, no exfoliated particles were determined. The results are shown in Table 1.

### (Comparative Example 9)

The same operation as in Comparative Example 8 was performed, except that tetrabutylammonium hydroxide was replaced with tetrabutylammonium hydrogen sulfate. The Tyndall phenomenon was not determined in the resultant dispersion C9; i.e., interlayer exfoliation did not proceed. An LB film was formed through the same procedure as described above. The film was observed with an FE-SEM, and as a result, no exfoliated particles were determined. The results are shown in Table 1.

**Table 1**

| | Composition | | | | | | | | | Exfoliation operation | | | Exfoliated particles (C) Evaluation items | | | |
|---|---|---|---|---|---|---|---|---|---|---|---|---|---|---|---|---|
| | Layered polysilicate compound (B) | | | | Nitrogen-containing basic compound (A) | | Concentration ratio | Aqueous alcohol solution (D) | | | | | | | | |
| | Type | Average major axis length [µm] | Average thickness [nm] | Concentration [g/L] | Type | Concentration [mol/L] | A/B [mol/g] | Type | Concentration [vol%] | Method | Time [hr] | Liquid temperature [°C] | Dispersibility [Tyndall] | Average major axis length [µm] | Average thickness [nm] | Major axis length ratio CIE |
| Example 1 | Protonic octosilicate | 4.40 | 128 | 1.5 | TBAH | 0.05 | 0.033 | MeOH | 50 | Ultrasonic 240W | 18 | 40 | O Presence | 1.56 | 1.5 | 0.35 |
| Example 2 | Protonic octosilicate | 2.43 | 61 | 1.5 | TBAH | 0.05 | 0.033 | MeOH | 50 | Ultrasonic 240W | 18 | 40 | O Presence | 0.66 | 1.4 | 0.27 |
| Example 3 | Protonic octosilicate | 4.40 | 128 | 1.5 | TPAH | 0.05 | 0.033 | MeOH | 50 | Ultrasonic 240W | 18 | 40 | O Presence | 1.48 | 1.1 | 0.34 |
| Example 4 | Protonic octosilicate | 4.40 | 128 | 1.5 | TriBA | 0.05 | 0.033 | MeOH | 50 | Ultrasonic 240W | 18 | 40 | O Presence | 1.91 | 0.7 | 0.43 |
| Comparative Example 1 | Protonic octosilicate | 4.40 | 128 | 1.5 | TBAH | 0.05 | 0.033 | None | 0 | Ultrasonic 240W | 18 | 40 | O Presence | 0.30 | 1.8 | 0.07 |
| Comparative Example 2 | Protonic octosilicate | 4.40 | 128 | 1.5 | TEAR | 0.05 | 0.033 | MeOH | 50 | Ultrasonic 240W | 18 | 40 | × Absence | × Absence | × Absence | - |
| Comparative Example 3 | Protonic octosilicate | 4.40 | 128 | 1.5 | TMAH | 0.05 | 0.033 | MeOH | 50 | Ultrasonic 240W | 18 | 40 | × Absence | × Absence | × Absence | - |
| Comparative Example 4 | Protonic octosilicate | 4.40 | 128 | 1.5 | DiBA | 0.05 | 0.033 | MeOH | 50 | Ultrasonic 240W | 18 | 40 | × Absence | × Absence | × Absence | - |
| Comparative Example 5 | Protonic octosilicate | 4.40 | 128 | 1.5 | MBA | 0.05 | 0.033 | MeOH | 50 | Ultrasonic 240W | 18 | 40 | × Absence | × Absence | × Absence | - |
| Comparative Example 6 | Protonic octosilicate | 4.40 | 128 | 1.5 | TBAHS | 0.05 | 0.033 | MeOH | 50 | Ultrasonic 240W | 18 | 40 | × Absence | × Absence | × Absence | - |
| Comparative Example 7 | Protonic octosilicate | 4.40 | 128 | 1.5 | None | 0 | 0 | MeOH | 50 | Ultrasonic 240W | 18 | 40 | × Absence | × Absence | × Absence | - |
| Comparative Example 8 | Na-type octosilicate | 4.34 | 193 | 1.5 | TBAH | 0.05 | 0.033 | MeOH | 50 | Ultrasonic 240W | 18 | 40 | × Absence | × Absence | × Absence | - |
| Comparative Example 9 | Na-type octosilicate | 4.34 | 193 | 1.5 | TBAHS | 0.05 | 0.033 | MeOH | 50 | Ultrasonic 240W | 18 | 40 | × Absence | × Absence | × Absence | - |

The abbreviations for the types of the nitrogen-containing basic compound (A) and the aqueous alcohol solution (D) in the aforementioned Table 1 are as described below.
TBAH: tetrabutylammonium hydroxide
TPAH: tetrapropylammonium hydroxide
TEAH: tetraethylammonium hydroxide
TMAH: tetramethylammonium hydroxide
TriBA: tributylamine
DiBA: dibutylamine
MBA: monobutylamine
TBAHS: tetrabutylammonium hydrogen sulfate
MeOH: methanol

Table 1 also shows the ratio of the average major axis length of the exfoliated particles (C) to the average major axis length of the layered polysilicate compound (B); i.e., [Major axis length ratio (C/B)].

As shown in Table 1, in Examples 1 to 4 of the present invention, since a tertiary amine or quaternary ammonium hydroxide having one or more C₃₋₄ alkyl groups (nitrogen-containing basic compound (A)) was used, interlayer exfoliation of a protonic layered polysilicate compound proceeded in an aqueous alcohol solution containing the nitrogen-containing basic compound (A) to thereby generate exfoliated particles, and the interlayer exfoliated particles successfully achieved a relatively large major axis length (major axis length ratio: 0.27 or more) and an average thickness of 5 nm or less.

In contrast, in Comparative Example 1, the average major-axis length of exfoliated particles was considerably smaller than that in the Examples (major axis length ratio: 0.07), although the interlayer exfoliated particles were determined. Thus, it was found that the particulate form failed to be maintained.

In Comparative Examples 2 to 9, the interlayer exfoliation per se did not proceed.

### (Example 5)

The same operation as in Example 1 was performed, except that the methanol concentration was changed to 10 vol%, to thereby produce an exfoliated particle dispersion E5. The Tyndall phenomenon was determined in the exfoliated particle dispersion E5; i.e., good dispersibility was achieved. An LB film was formed through the same procedure as described above. The film was observed with an SPM, and as a result, exfoliated particles were determined. The exfoliated particles were found to have an average major axis length of 0.76 µm and an average thickness of 1.4 nm. The results are shown in Table 2.

### (Example 6)

The same operation as in Example 1 was performed, except that the methanol concentration was changed to 25 vol%, to thereby produce an exfoliated particle dispersion E6. The Tyndall phenomenon was determined in the exfoliated particle dispersion E6; i.e., good dispersibility was achieved. An LB film was formed through the same procedure as described above. The film was observed with an SPM, and as a result, exfoliated particles were determined. The exfoliated particles were found to have an average major axis length of 0.78 µm and an average thickness of 1.4 nm. The results are shown in Table 2.

### (Example 7)

The same operation as in Example 1 was performed, except that the methanol concentration was changed to 87 vol%, to thereby produce an exfoliated particle dispersion E7. The Tyndall phenomenon was determined in the exfoliated particle dispersion E7; i.e., good dispersibility was achieved. An LB film was formed through the same procedure as described above. The film was observed with an SPM, and as a result, exfoliated particles were determined. The exfoliated particles were found to have an average major axis length of 1.08 µm and an average thickness of 1.7 nm. The results are shown in Table 2.

### (Example 8)

The same operation as in Example 1 was performed, except that methanol (concentration: 50 vol%) was replaced with ethanol (concentration: 50 vol%), to thereby produce an exfoliated particle dispersion E8. The Tyndall phenomenon was determined in the exfoliated particle dispersion E8; i.e., good dispersibility was achieved. An LB film was formed through the same procedure as described above. The film was observed with an SPM, and as a result, exfoliated particles were determined. The exfoliated particles were found to have an average major axis length of 1.58 µm and an average thickness of 1.5 nm. The results are shown in Table 2.

### (Example 9)

The same operation as in Example 1 was performed, except that methanol (concentration: 50 vol%) was replaced with 1-propanol (concentration: 50 vol%), to thereby produce an exfoliated particle dispersion E9. The Tyndall phenomenon was determined in the exfoliated particle dispersion E9; i.e., good dispersibility was achieved. An LB film was formed through the same procedure as described above. The film was observed with an SPM, and as a result, exfoliated particles were determined. The exfoliated particles were found to have an average major axis length of 0.64 µm and an average thickness of 1.1 nm. The results are shown in Table 2.

### (Example 10)

The same operation as in Example 1 was performed, except that methanol (concentration: 50 vol%) was replaced with 2-propanol (concentration: 50 vol%), to thereby produce an exfoliated particle dispersion E10. The Tyndall phenomenon was determined in the exfoliated particle dispersion E10; i.e., good dispersibility was achieved. An LB film was formed through the same procedure as described above. The film was observed with an SPM, and as a result, exfoliated particles were determined. The exfoliated particles were found to have an average major axis length of 0.80 µm and an average thickness of 1.1 nm. The results are shown in Table 2.

### (Comparative Example 10)

The same operation as in Example 1 was performed, except that the methanol concentration was changed to 100 vol%. The Tyndall phenomenon was not determined in the resultant dispersion C10. An LB film was formed through the same procedure as described above. The film was observed with an SPM, and as a result, no exfoliated particles were determined. The results are shown in Table 2.

### (Comparative Example 11)

The same operation as in Example 1 was performed, except that methanol (concentration: 50 vol%) was replaced with 1-butanol (concentration: 50 vol%). In the resultant dispersion C11, an aqueous alcohol solution failed to be achieved due to phase separation between water and 1-butanol. The results are shown in Table 2.

**Table 2**

| | Composition | | | | | | | | | Exfoliation operation | | | Exfoliated particles (C) Evaluation items | | | |
|---|---|---|---|---|---|---|---|---|---|---|---|---|---|---|---|---|
| | Layered polysilicate compound (B) | | | | Nitrogen-containing basic compound (A) | | Concentration ratio | Aqueous alcohol solution (D) | | | | | | | | |
| | Type | Average major axis length [µm] | Average thickness [nm] | Concentration [g/L] | Type | Concentration [mol/L] | A/B [mol/g] | Type | Concentration [vol%] | Method | Time [hr] | Liquid temperature [°C] | Dispersibility [Tyndall] | Average major axis length [µm] | Average thickness [nm] | Major axis length ratio C/B |
| Example 5 | Protonic octosilicate | 4.40 | 128 | 1.5 | TBAH | 0.05 | 0.033 | MeOH | 10 | Ultrasonic 240W | 18 | 40 | O Presence | 0.76 | 1.4 | 0.17 |
| Example 6 | Protonic octosilicate | 4.40 | 128 | 1.5 | TBAH | 0.05 | 0.033 | MeOH | 25 | Ultrasonic 240W | 18 | 40 | O Presence | 0.78 | 1.4 | 0.18 |
| Example 1 (again) | Protonic octosilicate | 4.40 | 128 | 1.5 | TBAH | 0.05 | 0.033 | MeOH | 50 | Ultrasonic 240W | 18 | 40 | O Presence | 1.56 | 1.5 | 0.35 |
| Example 7 | Protonic octosilicate | 4.40 | 128 | 1.5 | TBAH | 0.05 | 0.033 | MeOH | 87 | Ultrasonic 240W | 18 | 40 | O Presence | 1.08 | 1.7 | 0.25 |
| Example 8 | Protonic octosilicate | 4.40 | 128 | 1.5 | TBAH | 0.05 | 0.033 | EtOH | 50 | Ultrasonic 240W | 18 | 40 | O Presence | 1.58 | 1.5 | 0.36 |
| Example 9 | Protonic octosilicate | 4.40 | 128 | 1.5 | TBAH | 0.05 | 0.033 | 1-PrOH | 50 | Ultrasonic 240W | 18 | 40 | O Presence | 0.64 | 1.1 | 0.15 |
| Example 10 | Protonic octosilicate | 4.40 | 128 | 1.5 | TBAH | 0.05 | 0.033 | IPA | 50 | Ultrasonic 240W | 18 | 40 | O Presence | 0.80 | 1.1 | 0.18 |
| Comparative Example 10 | Protonic octosilicate | 4.40 | 128 | 1.5 | TBAH | 0.05 | 0.033 | MeOH | 100 | Ultrasonic 240W | 18 | 40 | × Absence | × Absence | × Absence | - |
| Comparative Example 11 | Protonic octosilicate | 4.40 | 128 | 1.5 | TBAH | 0.05 | 0.033 | 1-BuOH | 50 | Ultrasonic 240W | 18 | 40 | Not generated due to phase separation | | | - |
| Comparative Example 1 (again) | Protonic octosilicate | 4.40 | 128 | 1.5 | TBAH | 0.05 | 0.033 | None | 0 | Ultrasonic 240W | 18 | 40 | O Presence | 0.30 | 1.8 | 0.07 |

The abbreviations for the types of the nitrogen-containing basic compound (A) and the aqueous alcohol solution (D) in the aforementioned Table 2 are as described below.
TBAH: tetrabutylammonium hydroxide
MeOH: methanol
EtOH: ethanol
1-PrOH: 1-propanol
IPA: 2-propanol (isopropyl alcohol)
1-BuOH: 1-butanol

Table 2 also shows the ratio of the average major axis length of the exfoliated particles (C) to the average major axis length of the layered polysilicate compound (B); i.e., [Major axis length ratio (C/B)].

As shown in Table 2, in Examples 5 to 7 and 8 to 10 of the present invention, since an aqueous C₁₋₃ alcohol solution (alcohol concentration: 10 vol% to 90 vol%) was used, interlayer exfoliation of a protonic layered polysilicate compound proceeded in the aqueous alcohol solution to thereby generate exfoliated particles, and the interlayer exfoliated particles successfully achieved a relatively large major axis length (major axis length ratio: 0.17 or more) and an average thickness of 5 nm or less.

In contrast, in Comparative Example 10 (alcohol concentration: 100 vol%), the interlayer exfoliation per se did not proceed. Meanwhile, in Comparative Example 11 (with use of a C₄ alcohol), an aqueous alcohol solution failed to be achieved due to phase separation.

### (Example 11)

The same operation as in Example 1 was performed, except that the particle concentration of the protonic layered polysilicate compound was changed from 1.5 g/L to 15 g/L, to thereby produce an exfoliated particle dispersion E11. The Tyndall phenomenon was determined in the exfoliated particle dispersion E11; i.e., good dispersibility was achieved. An LB film was formed through the same procedure as described above. The film was observed with an SPM, and as a result, exfoliated particles were determined. The exfoliated particles were found to have an average major axis length of 1.14 µm and an average thickness of 1.3 nm. The results are shown in Table 3.

### (Example 12)

The same operation as in Example 1 was performed, except that the particle concentration of the protonic layered polysilicate compound was changed from 1.5 g/L to 7.5 g/L, to thereby produce an exfoliated particle dispersion E12. The Tyndall phenomenon was determined in the exfoliated particle dispersion E12; i.e., good dispersibility was achieved. An LB film was formed through the same procedure as described above. The film was observed with an SPM, and as a result, exfoliated particles were determined. The exfoliated particles were found to have an average major axis length of 0.89 µm and an average thickness of 1.3 nm. The results are shown in Table 3.

### (Example 13)

The same operation as in Example 1 was performed, except that the tetrabutylammonium hydroxide concentration was changed from 0.05 mol/L to 0.025 mol/L, to thereby produce an exfoliated particle dispersion E13. The Tyndall phenomenon was determined in the exfoliated particle dispersion E13; i.e., good dispersibility was achieved. An LB film was formed through the same procedure as described above. The film was observed with an SPM, and as a result, exfoliated particles were determined. The exfoliated particles were found to have an average major axis length of 1.21 µm and an average thickness of 1.2 nm. The results are shown in Table 3.

### (Example 14)

The same operation as in Example 1 was performed, except that the tetrabutylammonium hydroxide concentration was changed from 0.05 mol/L to 0.1 mol/L, to thereby produce an exfoliated particle dispersion E14. The Tyndall phenomenon was determined in the exfoliated particle dispersion E14; i.e., good dispersibility was achieved. An LB film was formed through the same procedure as described above. The film was observed with an SPM, and as a result, exfoliated particles were determined. The exfoliated particles were found to have an average major axis length of 1.17 µm and an average thickness of 1.5 nm. The results are shown in Table 3.

**Table 3**

| | Composition | | | | | | | | | Exfoliation operation | | | Exfoliated particles (C) Evaluation items | | | |
|---|---|---|---|---|---|---|---|---|---|---|---|---|---|---|---|---|
| | Layered polysilicate compound (B) | | | | Nitrogen-containing basic compound (A) | | Concentration ratio | Aqueous alcohol solution (D) | | | | | | | | |
| | Type | Average major axis length [µm] | Average thickness [nm] | Concentration [g/L] | Type | Concentration [mol/L] | A/B [mol/g] | Type | Concentration [vol%] | Method | Time [hr] | Liquid temperature [°C] | Dispersibility [Tyndall] | Average major axis length [µm] | Average thickness [nm] | Major axis length ratio C/B |
| Example 11 | Protonic octosilicate | 4.40 | 128 | 15 | TBAH | 0.05 | 0.0033 | MeOH | 50 | Ultrasonic 240W | 18 | 40 | O Presence | 1.14 | 1.3 | 0.26 |
| Example 12 | Protonic octosilicate | 4.40 | 128 | 7.5 | TBAH | 0.05 | 0.0067 | MeOH | 50 | Ultrasonic 240W | 18 | 40 | O Presence | 0.89 | 1.3 | 0.20 |
| Example 13 | Protonic octosilicate | 4.40 | 128 | 1.5 | TBAH | 0.025 | 0.017 | MeOH | 50 | Ultrasonic 240W | 18 | 40 | O Presence | 1.21 | 1.2 | 0.28 |
| Example 1 (again) | Protonic octosilicate | 4.40 | 128 | 1.5 | TBAH | 0.05 | 0.033 | MeOH | 50 | Ultrasonic 240W | 18 | 40 | O Presence | 1.56 | 1.5 | 0.35 |
| Example 14 | Protonic octosilicate | 4.40 | 128 | 1.5 | TBAH | 0.1 | 0.067 | MeOH | 50 | Ultrasonic 240W | 18 | 40 | O Presence | 1.17 | 1.5 | 0.27 |
| Comparative Example 1 (again) | Protonic octosilicate | 4.40 | 128 | 1.5 | TBAH | 0.05 | 0.033 | None | 0 | Ultrasonic 240W | 18 | 40 | O Presence | 0.30 | 1.8 | 0.07 |
| Comparative Example 7 (again) | Protonic octosilicate | 4.40 | 128 | 1.5 | None | 0 | 0 | MeOH | 50 | Ultrasonic 240W | 18 | 40 | × Absence | × Absence | × Absence | - |

The abbreviations for the types of the nitrogen-containing basic compound (A) and the aqueous alcohol solution (D) in the aforementioned Table 3 are as described below.
TBAH: tetrabutylammonium hydroxide
MeOH: methanol

Table 3 also shows the ratio of the average major axis length of the exfoliated particles (C) to the average major axis length of the layered polysilicate compound (B); i.e., [Major axis length ratio (C/B)].

As shown in Table 3, in Examples 11 to 14 of the present invention, since the concentration of the nitrogen-containing basic compound (A) per unit mass of the protonic layered polysilicate compound (B); i.e., (A/B) was 0.003 mol/g to 0.07 mol/g, the interlayer exfoliated particles successfully achieved a relatively large major axis length (major axis length ratio: 0.20 or more) and an average thickness of 5 nm or less.

### (Example 15)

The same operation as in Example 1 was performed, except that the 18-hour ultrasonic treatment of the raw material liquid was replaced with 6-hour stirring treatment of the raw material liquid in a thermostatic bath (trade name: ETTAS EO-300B, available from AS ONE CORPORATION) at 60°C by use of a magnetic stirrer (trade name: HS-30D, available from AS ONE CORPORATION) with a stirring bar made of Teflon (registered trademark) having a diameter of 40 mm and a thickness of 8 mm at 400 rpm, to thereby produce an exfoliated particle dispersion E15. The liquid temperature after the treatment was 56°C. The Tyndall phenomenon was determined in the exfoliated particle dispersion E15; i.e., good dispersibility was achieved. An LB film was formed through the same procedure as described above. The film was observed with an SPM, and as a result, exfoliated particles were determined. The exfoliated particles were found to have an average major axis length of 1.42 µm and an average thickness of 1.3 nm. The results are shown in Table 4.

### (Example 16)

The same operation as in Example 1 was performed, except that the 18-hour ultrasonic treatment of the raw material liquid was replaced with 6-hour stirring treatment of the raw material liquid in a thermostatic bath at 50°C by use of a magnetic stirrer with a stirring bar made of Teflon (registered trademark) having a diameter of 40 mm and a thickness of 8 mm at 400 rpm, to thereby produce an exfoliated particle dispersion E16. The liquid temperature after the treatment was 49°C. The Tyndall phenomenon was determined in the exfoliated particle dispersion E16; i.e., good dispersibility was achieved. An LB film was formed through the same procedure as described above. The film was observed with an SPM, and as a result, exfoliated particles were determined. The exfoliated particles were found to have an average major axis length of 1.19 µm and an average thickness of 1.5 nm. The results are shown in Table 4.

### (Example 17)

The same operation as in Example 1 was performed, except that the 18-hour ultrasonic treatment of the raw material liquid was replaced with 6-hour stirring treatment of the raw material liquid in a thermostatic bath at 40°C by use of a magnetic stirrer with a stirring bar made of Teflon (registered trademark) having a diameter of 40 mm and a thickness of 8 mm at 400 rpm, to thereby produce an exfoliated particle dispersion E17. The liquid temperature after the treatment was 40°C. The Tyndall phenomenon was determined in the exfoliated particle dispersion E17; i.e., good dispersibility was achieved. An LB film was formed through the same procedure as described above. The film was observed with an SPM, and as a result, exfoliated particles were determined. The exfoliated particles were found to have an average major axis length of 0.60 µm and an average thickness of 1.6 nm. The results are shown in Table 4.

### (Example 18)

The same operation as in Example 1 was performed, except that the 18-hour ultrasonic treatment of the raw material liquid was replaced with 6-hour stirring treatment of the raw material liquid in a thermostatic bath at 30°C by use of a magnetic stirrer with a stirring bar made of Teflon (registered trademark) having a diameter of 40 mm and a thickness of 8 mm at 400 rpm, to thereby produce an exfoliated particle dispersion E18. The liquid temperature after the treatment was 33°C. The Tyndall phenomenon was determined in the exfoliated particle dispersion E18; i.e., good dispersibility was achieved. An LB film was formed through the same procedure as described above. The film was observed with an SPM, and as a result, exfoliated particles were determined. The exfoliated particles were found to have an average major axis length of 0.82 µm and an average thickness of 1.5 nm. The results are shown in Table 4.

### (Example 19)

The same operation as in Example 1 was performed, except that the 18-hour ultrasonic treatment of the raw material liquid was replaced with 6-hour stirring treatment of the raw material liquid at 23°C (room temperature) by use of a magnetic stirrer with a stirring bar made of Teflon (registered trademark) having a diameter of 40 mm and a thickness of 8 mm at 400 rpm, to thereby produce an exfoliated particle dispersion E19. The liquid temperature after the treatment was 23°C. The Tyndall phenomenon was determined in the exfoliated particle dispersion E19; i.e., good dispersibility was achieved. The dispersion was observed with an SPM, and as a result, exfoliated particles were determined. The exfoliated particles were found to have an average major axis length of 1.18 µm and an average thickness of 1.3 nm. FIG. 2(d) shows an SPM image of the exfoliated particles. The results are shown in Table 4.

**Table 4**

| | Composition | | | | | | | | | Exfoliation operation | | | Exfoliated particles (C) Evaluation items | | | |
|---|---|---|---|---|---|---|---|---|---|---|---|---|---|---|---|---|
| | Layered polysilicate compound (B) | | | | Nitrogen-containing basic compound (A) | | Concentration ratio | Aqueous alcohol solution (D) | | | | | | | | |
| | Type | Average major axis length [µm] | Average thickness [nm] | Concentration [g/L] | Type | Concentration [mol/L] | A/B [mol/g] | Type | Concentration [vol%] | Method | Time [hr] | Liquid temperature [°C] | Dispersibility [Tyndall] | Average major axis length [µm] | Average thickness [nm] | Major axis length ratio C/B |
| Example 15 | Protonic octosilicate | 4.40 | 128 | 15 | TBAH | 0.05 | 0.033 | MeOH | 50 | Stirring 400 rpm | 6 | 56 | O Presence | 1.42 | 1.3 | 0.32 |
| Example 16 | Protonic octosilicate | 4.40 | 128 | 1.5 | TBAH | 0.05 | 0.033 | MeOH | 50 | Stirring 400 rpm | 6 | 49 | O Presence | 1.19 | 1.5 | 0.27 |
| Example 17 | Protonic octosilicate | 4.40 | 128 | 1.5 | TBAH | 0.05 | 0.033 | MeOH | 50 | Stirring 400 rpm | 6 | 40 | O Presence | 0.60 | 1.6 | 0.14 |
| Example 18 | Protonic octosilicate | 4.40 | 128 | 1.5 | TBAH | 0.05 | 0.033 | MeOH | 50 | Stirring 400 rpm | 6 | 33 | O Presence | 0.82 | 1.5 | 0.19 |
| Example 19 | Protonic octosilicate | 4.40 | 128 | 1.5 | TBAH | 0.05 | 0.033 | MeOH | 50 | Stirring 400 rpm | 18 | Room temperature (23°C) | O Presence | 1.18 | 1.3 | 0.27 |

The abbreviations for the types of the nitrogen-containing basic compound (A) and the aqueous alcohol solution (D) in the aforementioned Table 4 are as described below.
TBAH: tetrabutylammonium hydroxide
MeOH: methanol

Table 4 also shows the ratio of the average major axis length of the exfoliated particles (C) to the average major axis length of the layered polysilicate compound (B); i.e., [Major axis length ratio (C/B)].

As shown in Table 4, in Examples 15 to 19 of the present invention, since the stirring was performed at a liquid temperature of 23 to 56°C, the interlayer exfoliated particles successfully achieved a relatively large major axis length (major axis length ratio: 0.14 or more) and an average thickness of 5 nm or less.

(Example 20: Production of Film-Forming Composition Containing Interlayer Exfoliated Particles)

Firstly, 20 mL of the exfoliated particle dispersion (E1) produced in Example 1 was subjected to centrifugal treatment with a micro cooling centrifuge (trade name: Model 3700, available from Kubota Corporation) at a rotation speed of 12,000 rpm for 30 minutes, to thereby precipitate exfoliated particles, and the resultant supernatant was removed. Subsequently, 5 mL of methanol was added to 1 g of the precipitate containing the exfoliated particles, and the mixture was subjected to ultrasonic treatment (output: 240 W) for several minutes, to thereby re-disperse the exfoliated particles in methanol and to produce a film-forming composition 1 containing the exfoliated particles.

The film-forming composition 1 containing the exfoliated particles was irradiated with light having a wavelength of 532 nm by use of a green laser pointer, and the Tyndall phenomenon was determined; i.e., the dispersibility was evaluated as good. Even after the composition was allowed to stand still at room temperature for 180 days or more, no precipitate was visually observed in the composition, indicating that the dispersibility was maintained.

### (Example 21)

Firstly, 20 mL of the exfoliated particle dispersion (E1) produced in Example 1 was subjected to centrifugal treatment with a micro cooling centrifuge at a rotation speed of 12,000 rpm for 60 minutes, to thereby precipitate exfoliated particles, and the resultant supernatant was removed. Subsequently, 10 mL of methanol was added to 1 g of the precipitate containing the exfoliated particles, and the mixture was subjected to ultrasonic treatment (output: 240 W) for several minutes, to thereby re-disperse the exfoliated particles in methanol and to produce a film-forming composition 2 containing the exfoliated particles.

The film-forming composition 2 containing the exfoliated particles was irradiated with light having a wavelength of 532 nm by use of a green laser pointer, and the Tyndall phenomenon was determined; i.e., the dispersibility was evaluated as good.

### (Example 22: Production of Coating Film Containing Interlayer Exfoliated Particles)

Firstly, 0.4 mL of the film-forming composition 1 containing the exfoliated particles produced in Example 20 was dropped onto a 5 × 5 cm silicon substrate, and then allowed to stand still until the composition was spread over the entire substrate. Subsequently, spin coating was performed with a spin coater (trade name: Opticoat MS-A100, available from Mikasa Co., Ltd.) under the following conditions: at 200 rpm for 5 seconds, at 0 rpm for 3 seconds, and at 2,000 rpm for 5 seconds. Thereafter, the composition was dried on a hot plate at 100°C. This operation was repeated five times to thereby form a coating film containing the exfoliated particles.

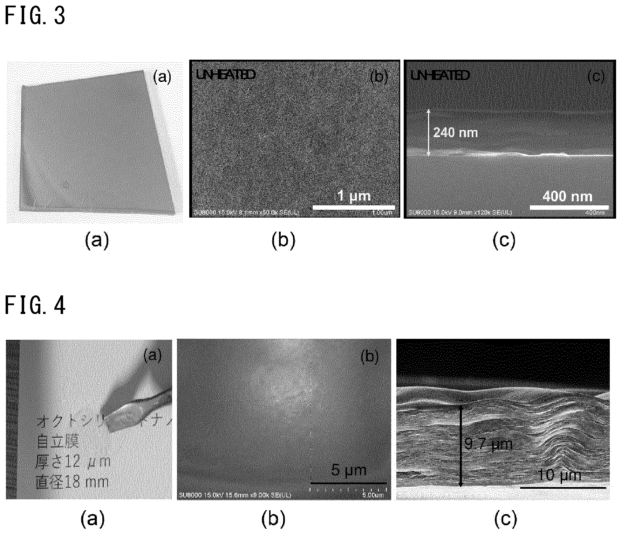

The resultant coating film containing the exfoliated particles exhibited very high transparency and a reddish tint caused by light interference. The surface of the film was found to be very smooth through observation with an FE-SEM. The film was found to have an average thickness of 240 nm through observation of a cross section with an FE-SEM. This result reflects that the exfoliated particles prepared in Example 1 have film formability. FIGS. 3(a) to 3(c) show FE-SEM images of the appearance, surface, and cross section of the coating film containing the exfoliated particles.

### (Example 23)

The coating film containing the exfoliated particles formed in Example 22 was further subjected to thermal treatment on a hot plate at 200°C for one hour.

The resultant coating film containing the exfoliated particles (after thermal treatment at 200°C) exhibited very high transparency and a greenish tint caused by light interference. The surface of the film was found to be very smooth through observation with an FE-SEM. The film was found to have an average thickness of 200 nm through observation of a cross section with an FE-SEM.

### (Example 24)

The coating film containing the exfoliated particles formed in Example 22 was further subjected to thermal treatment on a hot plate at 300°C for one hour.

The resultant coating film containing the exfoliated particles (after thermal treatment at 300°C) exhibited very high transparency and a bluish tint caused by light interference. The surface of the film was found to be very smooth through observation with an FE-SEM. The film was found to have an average thickness of 180 nm through observation of a cross section with an FE-SEM.

### (Example 25)

The coating film containing the exfoliated particles formed in Example 22 was further subjected to thermal treatment on a hot plate at 400°C for one hour.

The resultant coating film containing the exfoliated particles (after thermal treatment at 400°C) exhibited very high transparency and a bluish tint caused by light interference. The surface of the film was found to be very smooth through observation with an FE-SEM. The film was found to have an average thickness of 150 nm through observation of a cross section with an FE-SEM.

### (Example 26: Production of Free-Standing Membrane Containing Interlayer Exfoliated Particles)

Firstly, 20 mL of the exfoliated particle dispersion (E1) produced in Example 1 was suction-filtered with a suction filtering apparatus (diameter: 18 mmφ) having a membrane filter (pore size: 0.22 µm) (trade name: Isopore GTTP04700, available from Merck Millipore, made of polycarbonate, hydrophilic). The residue on the filter was washed with pure water, and then continuously suction-filtered, followed by drying for three hours, to thereby form a free-standing membrane containing the exfoliated particles.

The free-standing membrane containing the exfoliated particles exhibited very high transparency and had such mechanical strength and flexibility that it would not collapse even when touched with bare hands. The surface of the free-standing membrane was found to be very smooth through observation with an FE-SEM. Through observation of a cross section of the film with an FE-SEM, the film was found to have a layered structure probably formed of the exfoliated particles and to have an average thickness of 9.7 µm. This result reflects that the exfoliated particles prepared in Example 1 have film formability. FIGS. 4(a) to 4(c) show FE-SEM images of the appearance, surface, and cross section of the free-standing membrane containing the exfoliated particles.

### (Example 27)

The film-forming composition 2 containing the exfoliated particles produced in Example 21 was suction-filtered with the aforementioned suction filtering apparatus (diameter: 18 mmφ) having a membrane filter. The residue on the filter was washed with pure water, and then continuously suction-filtered, followed by drying for 12 hours, to thereby form a free-standing membrane containing the exfoliated particles.

The free-standing membrane containing the exfoliated particles exhibited very high transparency and had such mechanical strength and flexibility that it would not collapse even when touched with bare hands. Through observation of a cross section of the film with an FE-SEM, the film was found to have a layered structure probably formed of the exfoliated particles and to have an average thickness of 43 µm.

### (Example 28: Production of Proton Conductor Containing Interlayer Exfoliated Particles)

Firstly, 2 µL of the exfoliated particle dispersion (E1) produced in Example 1 was dropped onto comb-shaped electrodes, followed by drying at 100°C, to thereby form a coating film containing the exfoliated particles on the electrodes. The coating film was found to have an average thickness of 1.6 µm through observation with an SPM.

Proton conductivity was evaluated by using the coating film containing the exfoliated particles as a proton conductor. An equivalent circuit system was assembled by regarding a portion having an electrode interval of 2 µm and a thickness of 1.6 µm as a resistor, and the conductivity (σ) was calculated from the resistance (R).

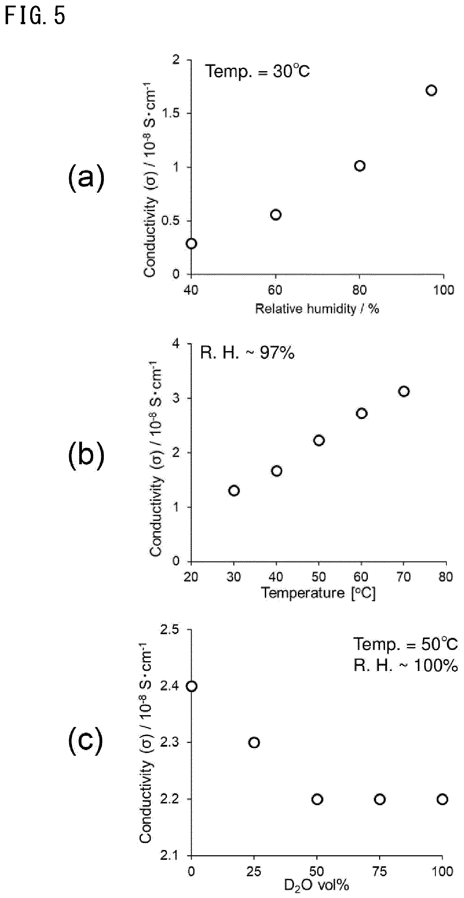

The relative humidity dependence of the conductivity (σ) was evaluated at a fixed temperature of 30°C. The results were as follows: σ = 2.9 × 10⁻⁹ S/cm at a relative humidity of 40%, σ = 5.6 × 10⁻⁹ S/cm at a relative humidity of 60%, σ = 1.0 × 10⁻⁸ S/cm at a relative humidity of 80%, and σ = 1.7 × 10⁻⁸ S/cm at a relative humidity of 97%; i.e., an increase in relative humidity led to an increase in conductivity. The results suggested that the aforementioned coating film has proton conductivity. FIG. 5(a) shows the relative humidity dependence of the conductivity (σ) at a temperature of 30°C.

Next, the temperature dependence of the conductivity (σ) was evaluated at a fixed relative humidity of 97%. The results were as follows: σ = 1.3 × 10⁻⁸ S/cm at a temperature of 30°C, σ = 1.7 × 10⁻⁸ S/cm at a temperature of 40°C, σ = 2.2 × 10⁻⁸ S/cm at a temperature of 50°C, σ = 2.7 × 10⁻⁸ S/cm at a temperature of 60°C, and σ = 3.1 × 10⁻⁸ S/cm at a temperature of 70°C; i.e., an increase in temperature led to an increase in conductivity. The activation energy was calculated from Arrhenius plot and found to be 0.20 eV FIG. 5(b) shows the temperature dependence of the conductivity (σ) at a relative humidity of 97%.

Next, the H₂O/D₂O ratio dependence of the conductivity (σ) was evaluated at a fixed temperature of 50°C and a fixed relative humidity of 100%. The results were as follows: σ = 2.4 × 10⁻⁸ S/cm when H₂O/D₂O = 100/0, 2.3 × 10⁻⁸ S/cm when H₂O/D₂O = 75/25, 2.2 × 10⁻⁸ S/cm when H₂O/D₂O = 50/50, 2.2 × 10⁻⁸ S/cm when H₂O/D₂O = 25/75, and 2.2 × 10⁻⁸ S/cm when H₂O/D₂O = 0/100; i.e., an increase in H₂O ratio led to an increase in conductivity (σ). The results indicated that the coating film containing the exfoliated particles has characteristics as a proton conductor having proton conductivity. FIG. 5(c) shows the H₂O/D₂O ratio dependence of the conductivity (σ) at a temperature of 50°C and a relative humidity of 100%.

### (Example 29: Production of Electrolyte Film for Fuel Cell Containing Interlayer Exfoliated Particles)

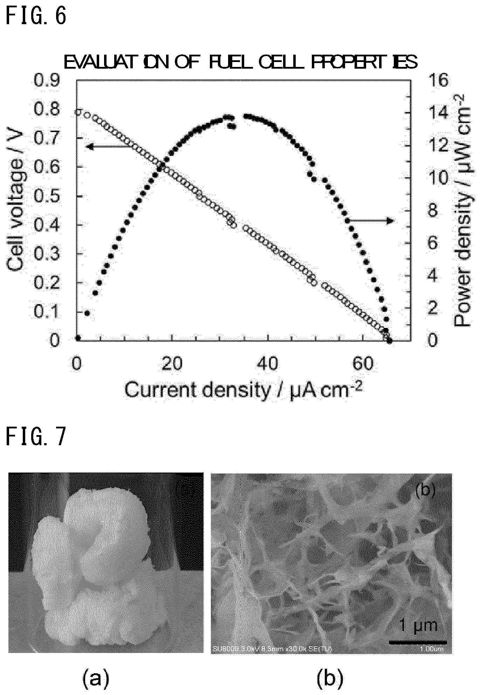

The free-standing membrane containing the exfoliated particles formed in Example 27 was used as an electrolyte film for a fuel cell to thereby produce a cell for fuel cell evaluation, and the electrolyte film for a fuel cell was evaluated for power generation properties. The electromotive force (V) and the current (I) were calculated to be 0.79 V and 65.5 µA, respectively, from the I-V curve when humidified hydrogen and humidified air were caused to pass through the anode and the cathode, respectively. The resistance (R) was calculated to be 1.21 × 10⁴ Ω from the gradient of the I-V curve. The conductivity (σ) was calculated to be 3.6 × 10⁻⁷ S/cm from the calculated resistance (R), the electrode area (1 cm²), and the average thickness of the electrolyte film (43 µm). The maximum output density was 14 µW/cm². These results indicated that the free-standing membrane containing the exfoliated particles has characteristics as an electrolyte film for a fuel cell. FIG. 6 shows the power generation properties (I-V property and output density) of the electrolyte film for a fuel cell.

### (Example 30: Production of Porous Body-Forming Composition Containing Interlayer Exfoliated Particles)

Firstly, 20 mL of the exfoliated particle dispersion (E1) produced in Example 1 was subjected to centrifugal treatment with a micro cooling centrifuge at a rotation speed of 13,500 rpm for 30 minutes, to thereby precipitate exfoliated particles, and the resultant supernatant was removed. Subsequently, 30 mL of tert-butanol was added to 1 g of the precipitate containing the exfoliated particles, and the mixture was subjected to ultrasonic treatment (output: 240 W) for several minutes, to thereby re-disperse the exfoliated particles in tert-butanol and to produce a porous body-forming composition containing the exfoliated particles.

The porous body-forming composition containing the exfoliated particles was irradiated with light having a wavelength of 532 nm by use of a green laser pointer, and the Tyndall phenomenon was determined; i.e., the dispersibility was evaluated as good.

### (Example 31: Production of Porous Body Containing Interlayer Exfoliated Particles)

The porous body-forming composition containing the exfoliated particles produced in Example 30 was freeze-dried with a freeze dryer (trade name: FREEZE DRYER FD1000, available from TOKYO RIKAKIKAI CO., LTD. (EYELA)) at a temperature of -50°C and a pressure of 15 Pa to 30 Pa for two days, to thereby produce a porous body.

The resultant porous body containing the exfoliated particles was a blocky solid. Through observation of the surface of the porous body with an FE-SEM, the porous body was found to have a very thin porous structure having a wall thickness of several nanometers. FIGS. 7(a) and 7(b) show FE-SEM images of the appearance and surface of the porous body containing the exfoliated particles.

The surface area of the porous body containing the exfoliated particles was measured with an automatic specific surface area/pore distribution measuring device, and the porous body was found to have a specific surface area of 53.1 m²/g. Thus, the specific surface area was about 4.5-fold greater than the specific surface area (11.7 m²/g) of the protonic octosilicate prepared in Particle Synthesis Example 1 before interlayer exfoliation; i.e., the porosity was increased.

### INDUSTRIAL APPLICABILITY

The exfoliated particle dispersion of the present invention, or each of the film-forming composition and porous body-forming composition containing exfoliated particles of the present invention can be used not only as a raw material of a porous body, a catalyst, etc., but also as a raw material of a filler for an ink, a paint, and a coating agent, which are required to have one or more functions among film formability, transparency, flexibility, or barrier property.

Each of an LB film formed from the exfoliated particle dispersion or film-forming composition containing exfoliated particles of the present invention, a coating film containing the exfoliated particles, and a free-standing membrane containing the exfoliated particles can be formed on the surface or the interior of a metal, plastic, organic resin, glass, or ceramic substrate, or can be used in an application for forming a nanocomposite. In addition, the coating film or the free-standing membrane is expected to be applied to a functional thin film, such as a proton conductor, an electrolyte film for a fuel cell, or a gas barrier film.

## Claims

1. An exfoliated particle dispersion **characterized by** comprising at least one nitrogen-containing basic compound (A), which is a tertiary amine or quaternary ammonium hydroxide having one or more C₃₋₄ alkyl groups, wherein exfoliated particles (C) generated by interlayer exfoliation of a protonic layered polysilicate compound (B) are dispersed in a 10 vol% to 90 vol% aqueous C₁₋₃ alcohol solution (D).

2. The exfoliated particle dispersion according to claim 1, wherein the nitrogen-containing basic compound (A) is tributylamine, tetrapropylammonium hydroxide, or tetrabutylammonium hydroxide.

3. The exfoliated particle dispersion according to claim 1 or 2, wherein the protonic layered polysilicate compound (B) is protonic octosilicate.

4. The exfoliated particle dispersion according to any one of claims 1 to 3,
wherein the exfoliated particles (C) are plate-like particles having an average thickness of 5 nm or less.

5. The exfoliated particle dispersion according to any one of claims 1 to 4,
wherein the aqueous alcohol solution (D) is an aqueous solution of at least one alcohol selected from the group consisting of methanol, ethanol, 1-propanol, and 2-propanol.

6. A film-forming composition or porous body-forming composition comprising at least the exfoliated particles (C) in the exfoliated particle dispersion according to any one of claims 1 to 5.

7. A Langmuir-Blodgett (LB) film or coating film comprising at least the exfoliated particles (C) in the exfoliated particle dispersion according to any one of claims 1 to 5.

8. A free-standing membrane comprising at least the exfoliated particles (C) in the exfoliated particle dispersion according to any one of claims 1 to 5.

9. A proton conductor comprising the Langmuir-Blodgett (LB) film or coating film according to claim 7 or the free-standing membrane according to claim 9.

10. An electrolyte film for a fuel cell comprising the proton conductor according to claim 9.

11. A porous body comprising at least the exfoliated particles (C) in the exfoliated particle dispersion according to any one of claims 1 to 5.

12. A production method for an exfoliated particle dispersion, the method comprising:
a step of preparing a raw material liquid containing at least one nitrogen-containing basic compound (A), which is a tertiary amine or quaternary ammonium hydroxide having one or more C₃₋₄ alkyl groups, a protonic layered polysilicate compound (B), and a 10 vol% to 90 vol% aqueous C₁₋₃ alcohol solution (D), to thereby cause interlayer exfoliation of the protonic layered polysilicate compound (B), and to produce a dispersion of exfoliated particles (C) generated by the interlayer exfoliation and having an average thickness of 5 nm or less.

13. The production method for an exfoliated particle dispersion according to claim 12, wherein the concentration of the nitrogen-containing basic compound (A) is 0.005 mol/L to 0.2 mol/L in the raw material liquid.

14. The production method for an exfoliated particle dispersion according to claim 12 or 13, wherein the nitrogen-containing basic compound (A) is tributylamine, tetrapropylammonium hydroxide, or tetrabutylammonium hydroxide.

15. The production method for an exfoliated particle dispersion according to any one of claims 12 to 14, wherein the protonic layered polysilicate compound (B) is protonic octosilicate.

16. The production method for an exfoliated particle dispersion according to any one of claims 12 to 15, wherein the concentration of the nitrogen-containing basic compound (A) per unit mass of the protonic layered polysilicate compound (B) is 0.003 mol/g to 0.07 mol/g in the raw material liquid.

17. The production method for an exfoliated particle dispersion according to any one of claims 12 to 16, wherein the aqueous alcohol solution (D) is an aqueous solution of at least one alcohol selected from the group consisting of methanol, ethanol, 1-propanol, and 2-propanol.

18. The production method for an exfoliated particle dispersion according to any one of claims 12 to 17, wherein the production method further comprises a step of subjecting the raw material liquid to at least one of stirring treatment and ultrasonic treatment.

19. The production method for an exfoliated particle dispersion according to any one of claims 12 to 18, wherein each step is performed at a liquid temperature of 10°C to 80°C.
